(19) **Europäisches Patentamt**
**European Patent Office**
**Office européen des brevets**

(11) **EP 4 513 323 A1**

(12) **EUROPEAN PATENT APPLICATION**
published in accordance with Art. 153(4) EPC

(43) Date of publication:
**26.02.2025 Bulletin 2025/09**

(21) Application number: **23854236.9**

(22) Date of filing: **01.08.2023**

(51) International Patent Classification (IPC):
**G06F 3/14** (2006.01)

(52) Cooperative Patent Classification (CPC):
**G06F 3/14**

(86) International application number:
**PCT/CN2023/110542**

(87) International publication number:
**WO 2024/037332 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.08.2022   CN 202210981762**

(71) Applicant: **Huawei Technologies Co., Ltd.**
**Shenzhen, Guangdong 518129 (CN)**

(72) Inventor: **FAN, Zhaonan**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SCREEN MIRRORING METHOD, ELECTRONIC DEVICE AND SYSTEM**

(57) This application provides a projection method, an electronic device, and a system, and relates to the field of terminal technologies. In this application, a first electronic device determines, based on an electronic device type supported by an application to be displayed through projection, an application running mode supported by the application. Then, projection is performed based on a first application running mode in the application running mode, to obtain a better projection display effect. The method includes: After determining a first application in response to a display request sent by a second electronic device, the first electronic device determines an application running mode supported by the first application, where the application running mode corresponds to one or more electronic device types. Then, the first electronic device sends first projection data of the first application to the second electronic device based on a first application running mode in the application running mode, where the first projection data is used to cause the second electronic device to display the first application in the first application running mode.

FIG. 16

## Description

This application claims priority to Chinese Patent Application No. 202210981762.9, filed with the China National Intellectual Property Administration on August 15, 2022 and entitled "PROJECTION METHOD, ELECTRONIC DEVICE, AND SYSTEM", which is incorporated herein by reference in its entirety.

## TECHNICAL FIELD

Embodiments of this application relate to the field of terminal technologies, and in particular, to a projection method, an electronic device, and a system.

## BACKGROUND

In daily life or an office process, a user may need to use electronic devices of different forms. Work between a plurality of electronic devices is completed more conveniently and efficiently through collaboration.

For example, documents are stored in a mobile phone, so that the user can carry and view the documents. However, because the mobile phone is not configured with a mouse and a keyboard, editing efficiency is low when a document is directly edited through the mobile phone. In view of this, the mobile phone and a computer may establish a connection based on a multi-screen collaboration technology, and a document editing application on the mobile phone is projected to the computer for display, so that the user can edit the document through a keyboard and a mouse of the computer.

However, a receive end device can display, in a projection window, application projection content sent by a source end device, only after the application projection content is proportionally zoomed in or out based on a size of the projection window, causing a poor display effect.

## SUMMARY

To resolve the foregoing technical problems, this application provides a projection method, an electronic device, and a system. According to the technical solutions provided in this application, a first electronic device determines, based on an electronic device type supported by an application to be displayed through projection, an application running mode supported by the application. Then, projection is performed based on a first application running mode in the application running mode, to obtain a better projection display effect and meet a user requirement.

To achieve the foregoing technical objective, embodiments of this application provide the following technical solutions.

According to a first aspect, a projection method is provided. The method includes: A first electronic device determines a first application in response to a display request sent by a second electronic device. The first electronic device determines an application running mode supported by the first application, where the application running mode corresponds to one or more electronic device types. The first electronic device sends first projection data of the first application to the second electronic device based on a first application running mode in the application running mode, where the first projection data is used to cause the second electronic device to display the first application in the first application running mode.

In this way, the first electronic device can select, based on the application running mode supported by the first application, the appropriate first application running mode for projection, instead of performing proportional projection only based on a device type of the first electronic device. Therefore, the second electronic device displays the first application in the first application running mode, so that a better display effect can be provided for a user, and user experience can be improved.

In addition, the first application is run on the first electronic device. In view of this, a developer may not need to perform cross-device migration adaptation in an application development process, to reduce a development workload. In addition, the first application may be prevented from being run on the second electronic device, to reduce a risk of information leakage.

According to the first aspect, the application running mode supported by the first application includes one or more of the following: a computer application running mode, a tablet application running mode, a foldable mobile phone application running mode, and a normal mobile phone application running mode.

According to any one of the first aspect or the foregoing implementations of the first aspect, the first application has different interface layouts in different application running modes.

Optionally, in different application running modes, a home page of the first application has different interface layouts. For example, in the computer application running mode, the tablet application running mode, the foldable mobile phone application running mode, and the normal mobile phone application running mode, display elements in the home page of the first application decrease sequentially.

In this way, different application running modes may bring different projection display experience to the user.

According to any one of the first aspect or the foregoing implementations of the first aspect, that the first electronic device sends first projection data of the first application to the second electronic device based on a first application running mode in the application running mode includes: The first electronic device sends the first projection data of the first application to the second electronic device based on the first application running mode with a highest priority in the application running mode.

In this way, the first electronic device makes full use of an application ecosystem, and selects, based on the application running mode supported by the first application, a better application running mode from the application running mode to run the first application in a background. In this way, more display content is displayed on the second electronic device, and better display experience is provided for the user.

According to any one of the first aspect or the foregoing implementations of the first aspect, that the first electronic device sends first projection data of the first application to the second electronic device based on a first application running mode in the application running mode includes: The first electronic device determines a device type of the second electronic device. The first electronic device determines the first application running mode based on the device type of the second electronic device and a priority sequence in the application running mode. The first electronic device sends the first projection data of the first application to the second electronic device based on the first application running mode.

For example, the first electronic device selects an application running mode that corresponds to the device type of the second electronic device and that has a highest priority in the application running mode supported by the first application. For example, the first electronic device determines that the application running mode supported by the first application includes the computer application running mode, the tablet application running mode, and the foldable mobile phone application running mode, and determines that the device type of the second electronic device is a tablet. The first electronic device determines that an application running mode corresponding to the tablet is the tablet application running mode, and the application running mode supported by the first application includes the tablet application running mode. In this case, the first electronic device sends the first projection data of the first application to the second electronic device based on the tablet application running mode (namely, the first application running mode).

In this way, a projection window size of the second electronic device matches the device type of the second electronic device. This improves a projection display effect of the second electronic device, and further improves user experience.

According to any one of the first aspect or the foregoing implementations of the first aspect, the method further includes: in response to an operation of starting the first application on the first electronic device by the user, sending second projection data of the first application to the second electronic device based on a second application running mode corresponding to a device type of the first electronic device, where the second projection data is used to cause the second electronic device to display the first application in the second application running mode; and displaying, by the first electronic device, the first application in the second application running mode.

In this way, in a projection process, in response to the user operation, the first electronic device and the second electronic device can synchronously display the same projection application, to meet a use requirement of the user.

According to any one of the first aspect or the foregoing implementations of the first aspect, the method further includes: The first electronic device receives a first operation indication sent by the second electronic device, where the first operation indication is an indication sent by the second electronic device after the second electronic device detects an operation performed by the user on the first application in a projection window. In response to the first operation indication, the first electronic device sends the first projection data of the first application to the second electronic device based on the first application running mode, and displays the first application in a first window size, where the first window size corresponds to a screen size of the first electronic device, or the first window size is proportional to a second window size corresponding to the first application running mode.

In this way, in the projection process, the first electronic device and the second electronic device can display the same projection application based on the user operation. In additions, different from screen mirroring, display content of the projection application of the first electronic device may be different from display content of the projection application of the second electronic device. On the basis of ensuring that the first electronic device and the second electronic device synchronously display and refresh the projection application, a display effect is further improved, and user experience is improved.

According to any one of the first aspect or the foregoing implementations of the first aspect, the method further includes: The first electronic device displays prompt information in response to an operation of starting the first application on the first electronic device by the user, where the prompt information prompts the user to operate the first application on the second electronic device.

According to any one of the first aspect or the foregoing implementations of the first aspect, when the first application running mode is the computer application running mode, the method further includes: The first electronic device receives a second operation indication sent by the second electronic device, where the second operation indication is an indication sent by the second electronic device after the second electronic device detects an operation of adjusting the projection window size by the user. The first electronic device sends third projection data of the first application to the second electronic device based on the second operation indication, where the third projection data causes the second electronic device to display, in the first application running mode, the first application in the projection window whose size is adjusted.

In this way, the projection window is adjusted, so that projection of the second electronic device can better meet a use habit of the user, and user experience is further improved.

According to any one of the first aspect or the foregoing implementations of the first aspect, that the first electronic device determines an application running mode supported by the first application includes: The first electronic device determines, by using a configuration file of the first application or querying a second application, the application running mode supported by the first application, where the second application is an application market.

According to a second aspect, a projection method is provided. The method includes: A second electronic device sends a display request to a first electronic device, where the display request is a request sent by the second electronic device in response to an operation performed by a user on a projection window. The second electronic device receives first projection data sent by the first electronic device, where the first projection data is projection data corresponding to a first application running mode in an application running mode supported by a first application that is determined by the first electronic device in response to the display request, and the application running mode corresponds to one or more electronic device types. The second electronic device displays the first application in the projection window in the first application running mode based on the first projection data.

According to the second aspect, the application running mode supported by the first application includes one or more of the following: a computer application running mode, a tablet application running mode, a foldable mobile phone application running mode, and a normal mobile phone application running mode.

According to any one of the second aspect or the foregoing implementations of the second aspect, the first application has different interface layouts in different application running modes.

According to any one of the second aspect or the foregoing implementations of the second aspect, the method further includes: The second electronic device receives second projection data sent by the first electronic device, where the second projection data is projection data that is determined by the first electronic device based on a second application running mode corresponding to a device type of the first electronic device in response to an operation of starting the first application on the first electronic device by the user. The second electronic device displays the first application in the projection window in the second application running mode based on the second projection data.

According to any one of the second aspect or the foregoing implementations of the second aspect, the method further includes: The second electronic device sends a first operation indication to the first electronic device after detecting an operation performed by the user on the first application in the projection window. The second electronic device receives the first projection data sent by the first electronic device, and displays the first application in the projection window in the first application running mode based on the first projection data.

According to any one of the second aspect or the foregoing implementations of the second aspect, when the first application running mode is the computer application running mode, the method further includes: The second electronic device sends a second operation indication to the first electronic device when the second electronic device detects an operation of adjusting a projection window size by the user. The second electronic device receives third projection data sent by the first electronic device, where the third projection data is projection data corresponding to the first application running mode that is determined by the first electronic device after the first electronic device adjusts the projection window size in response to the second operation indication. The second electronic device displays, in the first application running mode based on the third projection data, the first application in the projection window whose window size is adjusted.

According to any one of the second aspect or the foregoing implementations of the second aspect, when the first application running mode is not the computer application running mode, the method further includes: In response to an operation of adjusting a projection window size by the user, the second electronic device proportionally zooms in or out and displays the projection window and a projection interface of the first application in the projection window.

For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the following operations: A first electronic device determines a first application in response to a display request sent by a second electronic device. The first electronic device determines an application running mode supported by the first application, where the application running mode corresponds to one or more electronic device types. The first electronic device sends first projection data of the first application to the second electronic device based on a first application running mode in the application running mode, where the first projection data is used to cause the second electronic device to display the first application in the first application running mode.

According to the third aspect, the application running mode supported by the first application includes one or more of the following: a computer application running mode, a tablet application running mode, a foldable mobile phone application running mode, and a normal mobile phone application running mode.

According to any one of the third aspect or the foregoing implementations of the third aspect, the first application has different interface layouts in different application running modes.

According to any one of the third aspect or the foregoing implementations of the third aspect, that the first electronic device sends first projection data of the first application to the second electronic device based on a first application running mode in the application running mode includes: The first electronic device sends the first projection data of the first application to the second electronic device based on the first application running mode with a highest priority in the application running mode.

According to any one of the third aspect or the foregoing implementations of the third aspect, that the first electronic device sends first projection data of the first application to the second electronic device based on a first application running mode in the application running mode includes: The first electronic device determines a device type of the second electronic device. The first electronic device determines the first application running mode based on the device type of the second electronic device and a priority sequence in the application running mode. The first electronic device sends the first projection data of the first application to the second electronic device based on the first application running mode.

According to any one of the third aspect or the foregoing implementations of the third aspect, when the processor reads the computer-readable instructions from the memory, the electronic device is further enabled to perform the following operation: in response to an operation of starting the first application on the first electronic device by a user, sending second projection data of the first application to the second electronic device based on a second application running mode corresponding to a device type of the first electronic device, where the second projection data is used to cause the second electronic device to display the first application in the second application running mode; and displaying, by the first electronic device, the first application in the second application running mode.

According to any one of the third aspect or the foregoing implementations of the third aspect, when the processor reads the computer-readable instructions from the memory, the electronic device is further enabled to perform the following operations: The first electronic device receives a first operation indication sent by the second electronic device, where the first operation indication is an indication sent by the second electronic device after the second electronic device detects an operation performed by the user on the first application in a projection window. In response to the first operation indication, the first electronic device sends the first projection data of the first application to the second electronic device based on the first application running mode, and displays the first application in a first window size, where the first window size corresponds to a screen size of the first electronic device, or the first window size is proportional to a second window size corresponding to the first application running mode.

According to any one of the third aspect or the foregoing implementations of the third aspect, when the processor reads the computer-readable instructions from the memory, the electronic device is further enabled to perform the following operation: The first electronic device displays prompt information in response to an operation of starting the first application on the first electronic device by the user, where the prompt information prompts the user to operate the first application on the second electronic device.

According to any one of the third aspect or the foregoing implementations of the third aspect, when the first application running mode is the computer application running mode, and the processor reads the computer-readable instructions from the memory, the electronic device is further enabled to perform the following operations: The first electronic device receives a second operation indication sent by the second electronic device, where the second operation indication is an indication sent by the second electronic device after the second electronic device detects an operation of adjusting a projection window size by the user. The first electronic device sends third projection data of the first application to the second electronic device based on the second operation indication, where the third projection data causes the second electronic device to display, in the first application running mode, the first application in the projection window whose size is adjusted.

According to any one of the third aspect or the foregoing implementations of the third aspect, that the first electronic device determines an application running mode supported by the first application includes: The first electronic device determines, by using a configuration file of the first application or querying a second application, the application running mode supported by the first application, where the second application is an application market.

For technical effects corresponding to any one of the third aspect and the implementations of the third aspect, refer to technical effects corresponding to any one of the first aspect and the implementations of the first aspect. Details are not described herein again.

According to a fourth aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the following operations: A second electronic device sends a display request to a first electronic device, where the display request is a request sent by the second electronic device in response to an operation performed by a user on a projection window. The second electronic device receives first projection data sent by the first electronic device, where the first projection data is projection data corresponding to a first application running mode in an application running mode supported by a first application that is determined by the first electronic device in response to the display request, and the application running mode corresponds to one or more electronic device types. The second electronic device displays the first application in the projection window in the first application running mode based on the first projection data.

According to the fourth aspect, the application running mode supported by the first application includes one or more of the following: a computer application running mode, a tablet application running mode, a foldable mobile phone application running mode, and a normal mobile phone application running mode.

According to any one of the fourth aspect or the foregoing implementations of the fourth aspect, the first application has different interface layouts in different application running modes.

According to any one of the fourth aspect or the foregoing implementations of the fourth aspect, when the processor reads the computer-readable instructions from the memory, the electronic device is further enabled to perform the following operations: The second electronic device receives second projection data sent by the first electronic device, where the second projection data is projection data that is determined by the first electronic device based on a second application running mode corresponding to a device type of the first electronic device in response to an operation of starting the first application on the first electronic device by the user. The second electronic device displays the first application in the projection window in the second application running mode based on the second projection data.

According to any one of the fourth aspect or the foregoing implementations of the fourth aspect, when the processor reads the computer-readable instructions from the memory, the electronic device is further enabled to perform the following operations: The second electronic device sends a first operation indication to the first electronic device after detecting an operation performed by the user on the first application in the projection window. The second electronic device receives the first projection data sent by the first electronic device, and displays the first application in the projection window in the first application running mode based on the first projection data.

According to any one of the fourth aspect or the foregoing implementations of the fourth aspect, when the first application running mode is the computer application running mode, and the processor reads the computer-readable instructions from the memory, the electronic device is further enabled to perform the following operations: The second electronic device sends a second operation indication to the first electronic device when the second electronic device detects an operation of adjusting a projection window size by the user. The second electronic device receives third projection data sent by the first electronic device, where the third projection data is projection data corresponding to the first application running mode that is determined by the first electronic device after the first electronic device adjusts the projection window size in response to the second operation indication. The second electronic device displays, in the first application running mode based on the third projection data, the first application in the projection window whose window size is adjusted.

According to any one of the fourth aspect or the foregoing implementations of the fourth aspect, when the first application running mode is not the computer application running mode, and the processor reads the computer-readable instructions from the memory, the electronic device is further enabled to perform the following operation: In response to an operation of adjusting a projection window size by the user, the second electronic device proportionally zooms in or out and displays the projection window and a projection interface of the first application in the projection window.

For technical effects corresponding to any one of the fourth aspect and the implementations of the fourth aspect, refer to technical effects corresponding to any one of the second aspect and the implementations of the second aspect. Details are not described herein again.

According to a fifth aspect, an embodiment of this application provides a projection system. The system includes a first electronic device and a second electronic device. The second electronic device is configured to send a display request to the first electronic device, where the display request is a request sent by the second electronic device in response to an operation performed by a user on a projection window. The first electronic device is configured to determine a first application in response to the display request sent by the second electronic device. The first electronic device is further configured to determine an application running mode supported by the first application, where the application running mode corresponds to one or more electronic device types. The first electronic device is further configured to send first projection data of the first application to the second electronic device based on a first application running mode in the application running mode. The second electronic device is further configured to receive the first projection data. The second electronic device is further configured to display the first application in the projection window in the first application running mode based on the first projection data.

According to the fifth aspect, the application running mode supported by the first application includes one or more of the following: a computer application running mode, a tablet application running mode, a foldable mobile phone application running mode, and a normal mobile phone application running mode.

According to any one of the fifth aspect or the foregoing implementations of the fifth aspect, the first application has different interface layouts in different application running modes.

According to any one of the fifth aspect or the foregoing implementations of the fifth aspect, the first electronic device is further configured to: in response to an operation of starting the first application on the first electronic device by the user, send second projection data of the first application to the second electronic device based on a second application running mode corresponding to a device type of the first electronic device; and display the first application in the second application running mode. The second electronic device is further configured to receive the second projection data. The second electronic device is further configured to display the first application in the projection window in the second application running mode based on the second projection data.

According to any one of the fifth aspect or the foregoing implementations of the fifth aspect, the second electronic device is further configured to send a first operation indication to the first electronic device after detecting an operation performed by the user on the first application in the projection window. The first electronic device is further configured to: in response to the first operation indication, send the first projection data of the first application to the second electronic device based on the first application running mode; and display the first application in a first window size, where the first window size corresponds to a screen size of the first electronic device, or the first window size is proportional to a second window size corresponding to the first application running mode. The second electronic device is further configured to: receive the first projection data sent by the first electronic device; and display the first application in the projection window in the first application running mode based on the first projection data.

For technical effects corresponding to any one of the fifth aspect and the implementations of the fifth aspect, refer to technical effects corresponding to any one of the first aspect and the implementations of the first aspect. Details are not described herein again.

According to a sixth aspect, an embodiment of this application provides an electronic device. The electronic device has a function of implementing the projection method according to any one of the first aspect and the possible implementations of the first aspect; or the electronic device has a function of implementing the projection method according to any one of the second aspect and the possible implementations of the second aspect. The function may be implemented by hardware, or may be implemented by hardware executing corresponding software. The hardware or the software includes one or more modules corresponding to the function.

For technical effects corresponding to any one of the sixth aspect and the implementations of the sixth aspect, refer to technical effects corresponding to any one of the first aspect and the implementations of the first aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect, or the electronic device is enabled to perform the method according to any one of the second aspect or the implementations of the second aspect.

For technical effects corresponding to any one of the seventh aspect and the implementations of the seventh aspect, refer to technical effects corresponding to any one of the first aspect and the implementations of the first aspect. Details are not described herein again.

According to an eighth aspect, an embodiment of this application provides a computer program product. When the computer program product runs on an electronic device, the electronic device is enabled to perform the method according to any one of the first aspect or the implementations of the first aspect, or the electronic device is enabled to perform the method according to any one of the second aspect or the implementations of the second aspect.

For technical effects corresponding to any one of the eighth aspect and the implementations of the eighth aspect, refer to technical effects corresponding to any one of the first aspect and the implementations of the first aspect. Details are not described herein again.

According to a ninth aspect, an embodiment of this application provides a circuit system. The circuit system includes a processing circuit. The processing circuit is configured to perform the method according to any one of the first aspect or the implementations of the first aspect, or the processing circuit is configured to perform the method according to any one of the second aspect or the implementations of the second aspect.

For technical effects corresponding to any one of the ninth aspect and the implementations of the ninth aspect, refer to technical effects corresponding to any one of the first aspect and the implementations of the first aspect. Details are not described herein again.

According to a tenth aspect, an embodiment of this application provides a chip system, including at least one processor and at least one interface circuit. The at least one interface circuit is configured to perform receiving and sending functions, and send instructions to the at least one processor. When the at least one processor executes the instructions, the at least one processor performs the method according to any one of the first aspect or the implementations of the first aspect, or the at least one processor performs the method according to any one of the second aspect or the implementations of the second aspect.

For technical effects corresponding to any one of the tenth aspect and the implementations of the tenth aspect, refer to technical effects corresponding to any one of the first aspect and the implementations of the first aspect. Details are not described herein again.

## BRIEF DESCRIPTION OF DRAWINGS

FIG. 1A and FIG. 1B are a diagram of a screen mirroring scenario according to an embodiment of this application;
FIG. 2A and FIG. 2B are a diagram of a multi-screen collaboration scenario of cross-device migration according to an embodiment of this application;
FIG. 3 is a diagram of a communication system to which a projection method is applied according to an embodiment of this application;
FIG. 4 is a diagram of a hardware structure of a first electronic device or a second electronic device according to an embodiment of this application;
FIG. 5A and FIG. 5B are a diagram of an application scenario of a projection method according to an embodiment of this application;
FIG. 6A is a diagram of a scenario in which a second electronic device displays a first application in a computer application running mode according to an embodiment of this application;
FIG. 6B-1 and FIG. 6B-2 are a diagram of a window size adjustment scenario in which a second electronic device displays a first application in a computer application running mode according to an embodiment of this application;

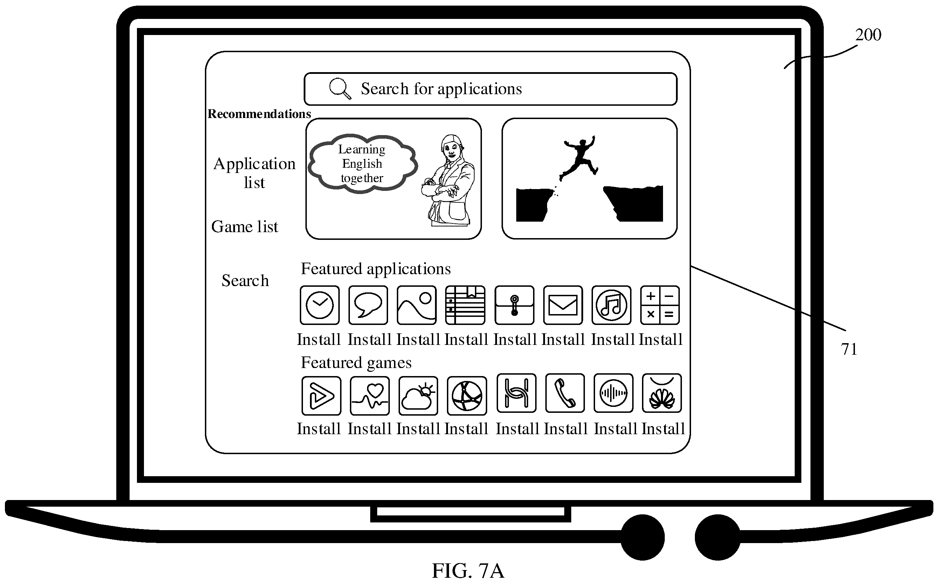

FIG. 7A is a diagram of a scenario in which a second electronic device displays a first application in a tablet application running mode according to an embodiment of this application;

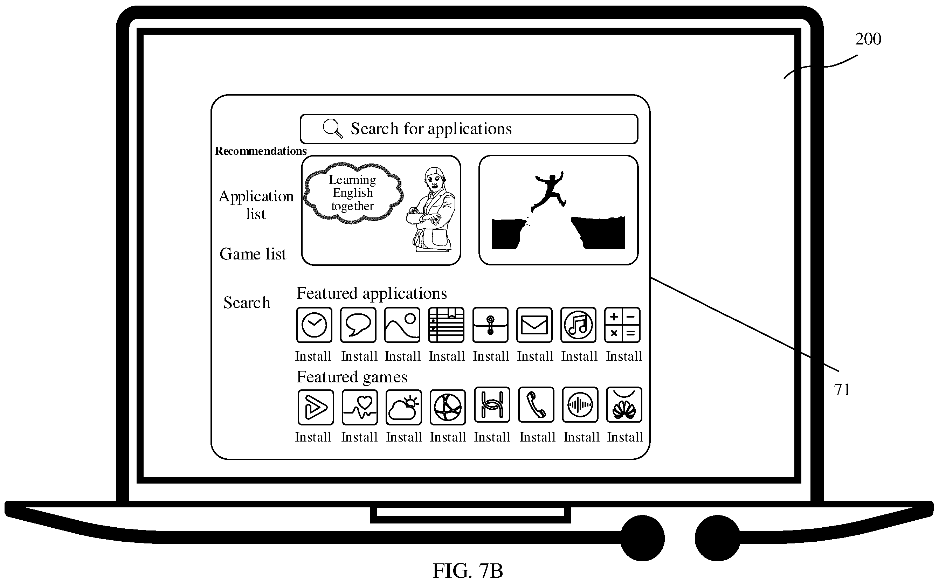

FIG. 7B is a diagram of a window size adjustment scenario in which a second electronic device displays a first application in a tablet application running mode according to an embodiment of this application;

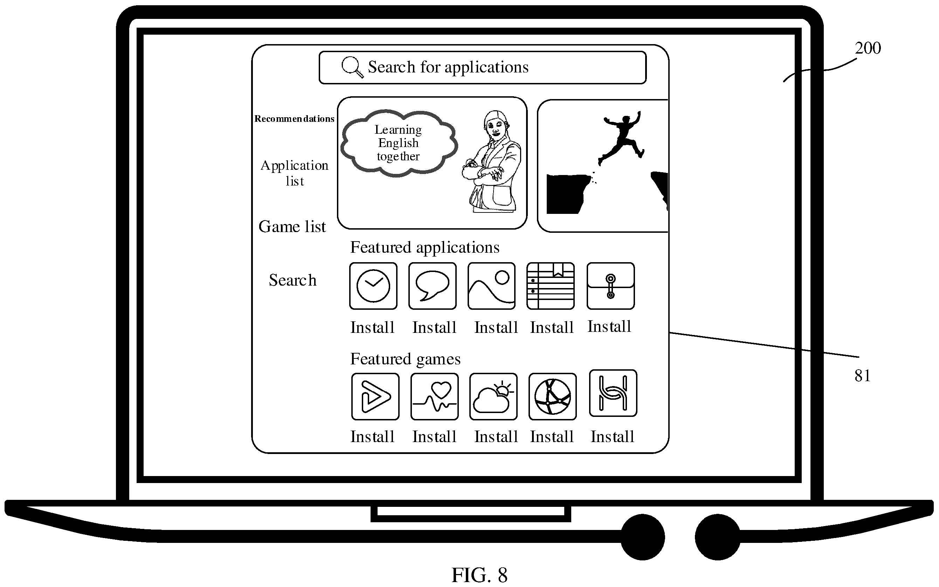

FIG. 8 is a diagram of a scenario in which a second electronic device displays a first application in a foldable mobile phone application running mode according to an embodiment of this application;

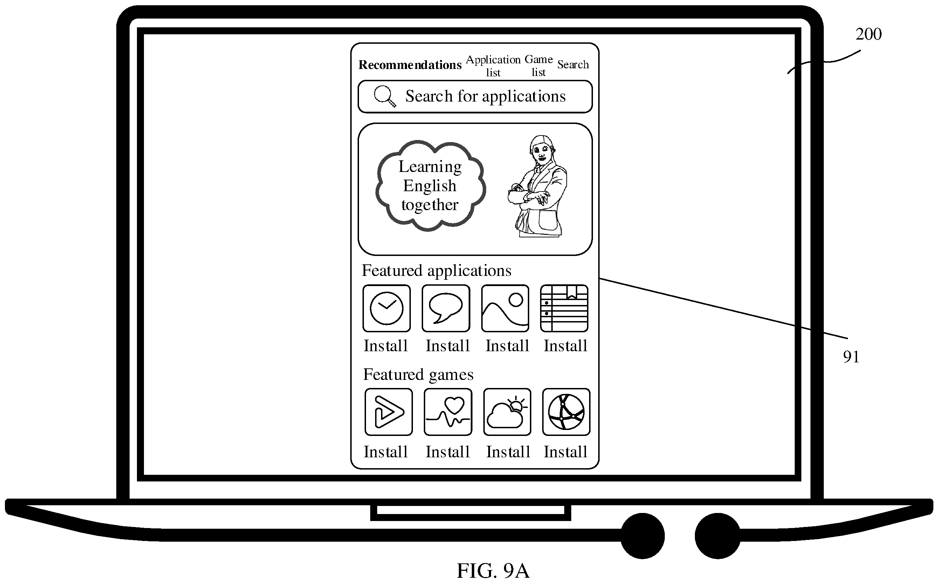

FIG. 9A is a diagram of a scenario in which a second electronic device displays a first application in a normal mobile phone application running mode according to an embodiment of this application;

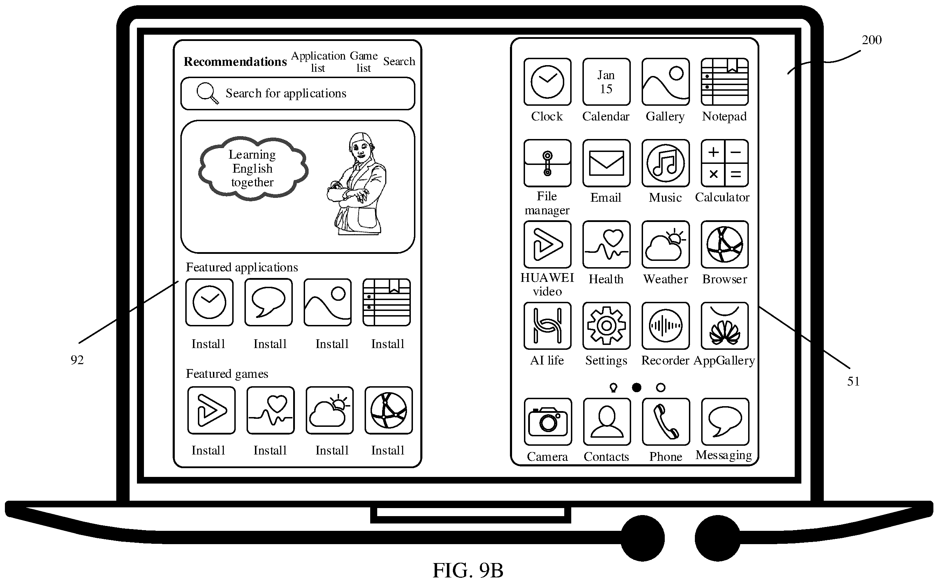

FIG. 9B is a diagram of a scenario in which a second electronic device displays a first application in a plurality of projection windows in a normal mobile phone application running mode according to an embodiment of this application;

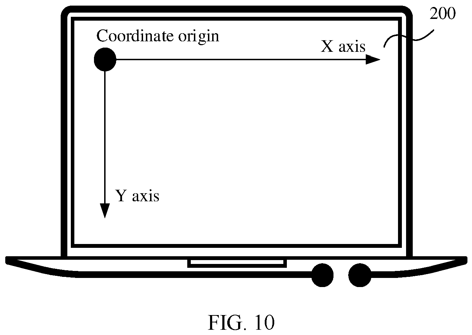

FIG. 10 is a diagram of a coordinate system according to an embodiment of this application;

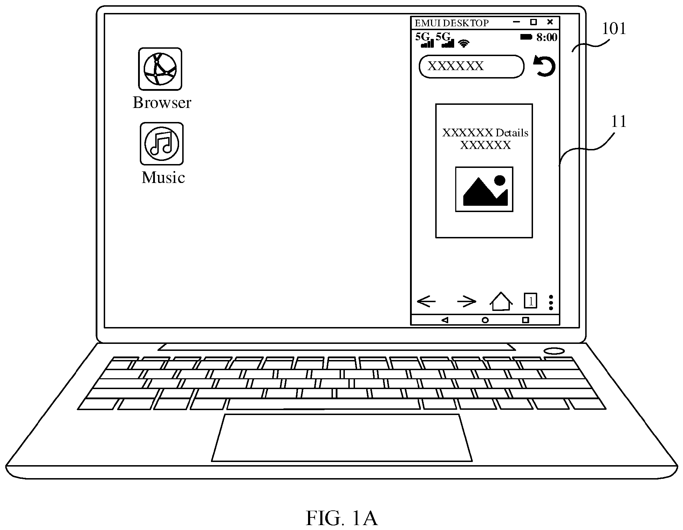

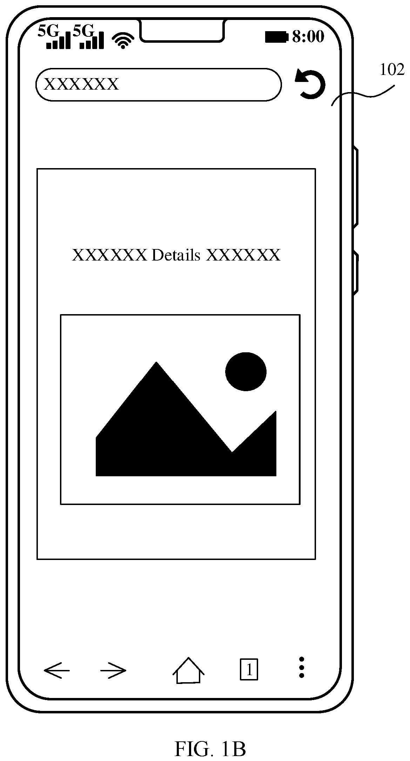

FIG. 1 1(a) and FIG. 1 1(b) are a diagram of a scenario in which a first electronic device cannot start a first application in a projection process according to an embodiment of this application;

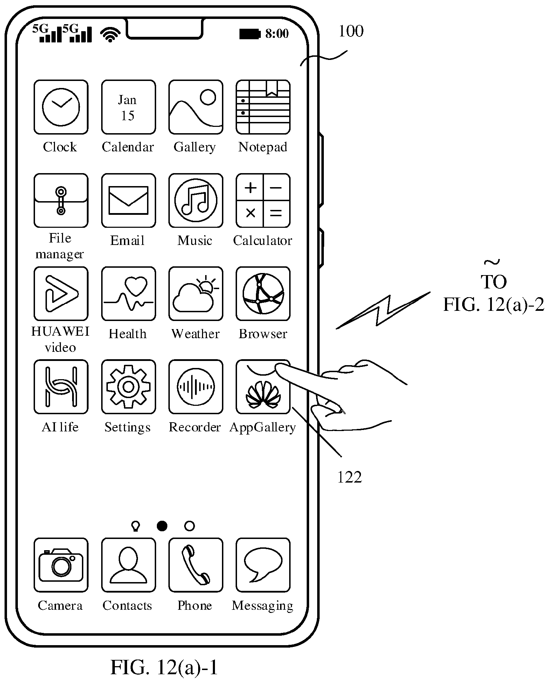

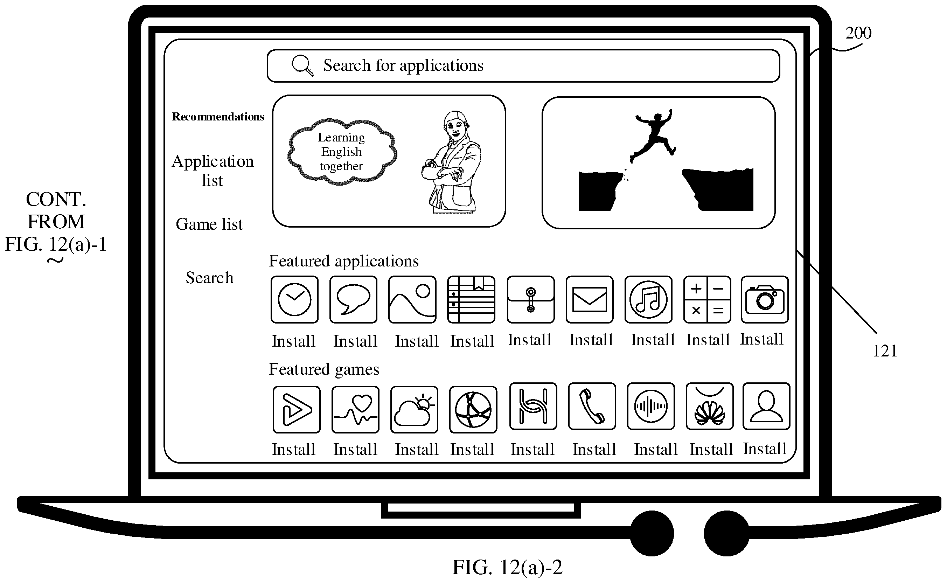

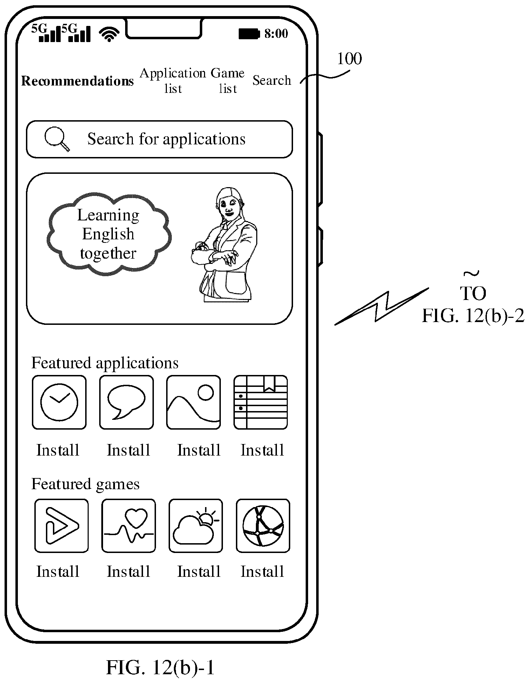

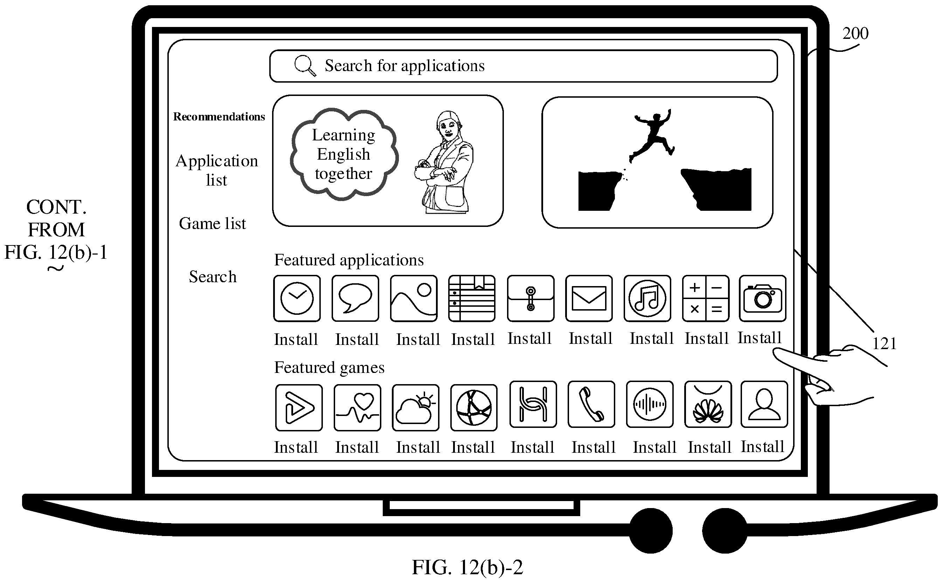

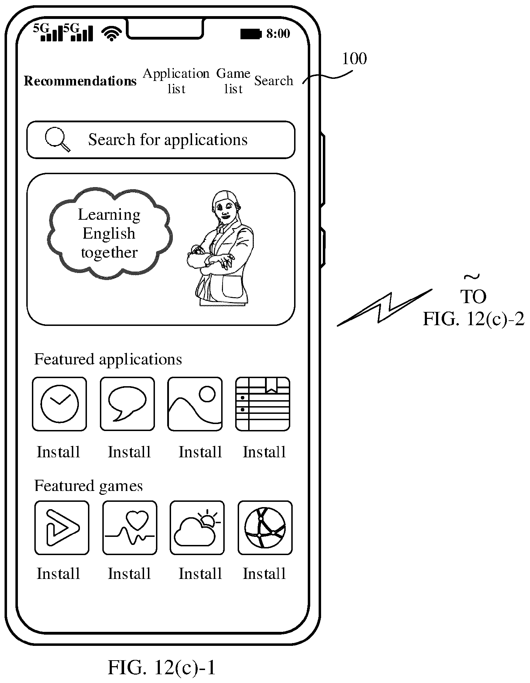

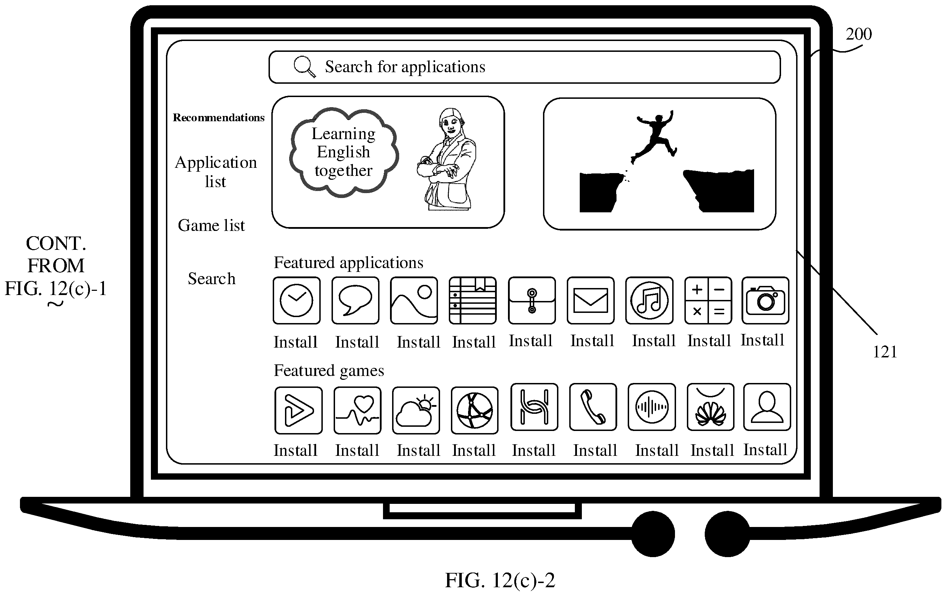

FIG. 12(a)-1 to FIG. 12(c)-2 are a diagram of a primary-secondary device switching scenario in a process in which a first electronic device runs a first application in a computer application running mode according to an embodiment of this application;

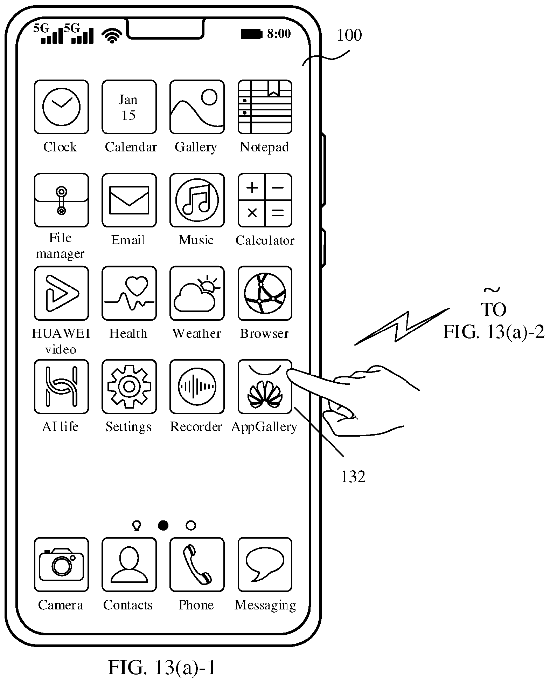

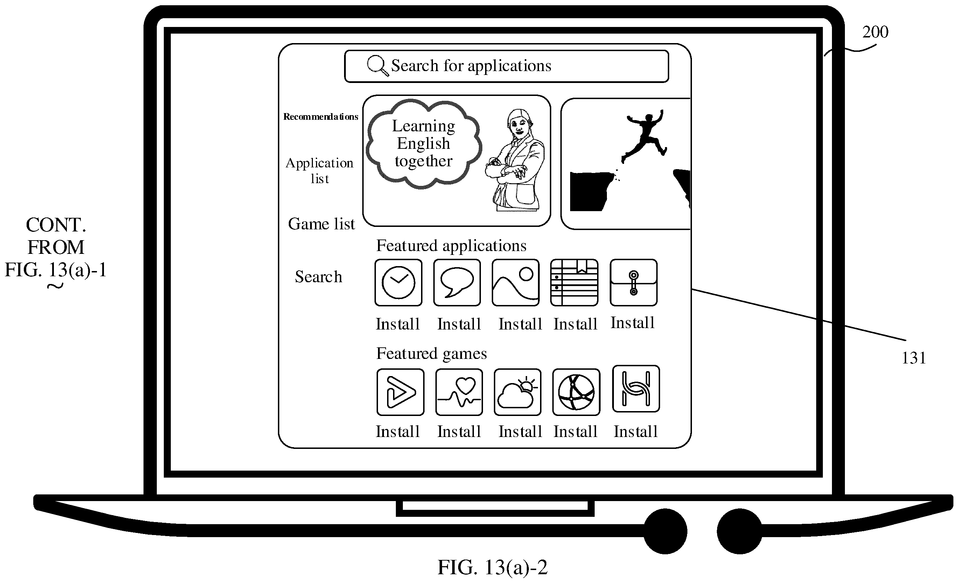

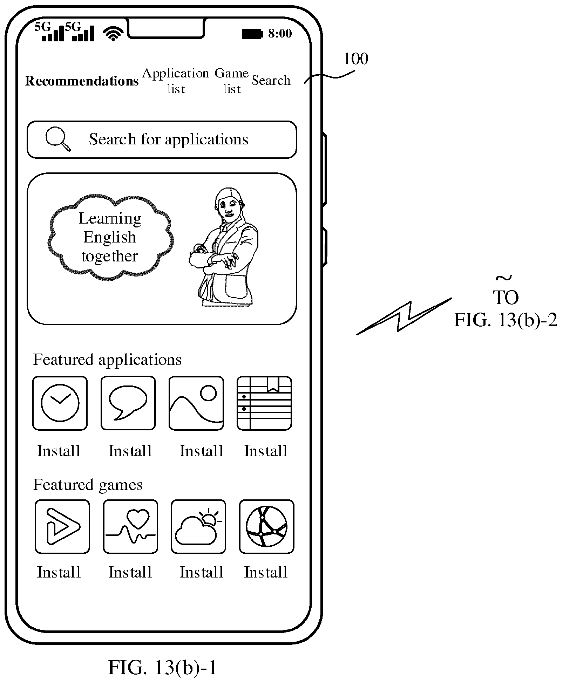

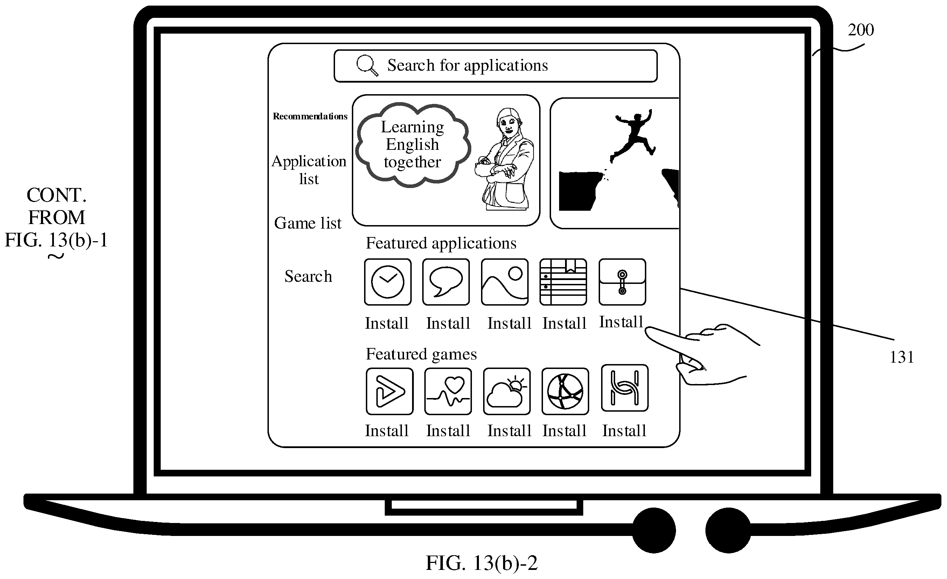

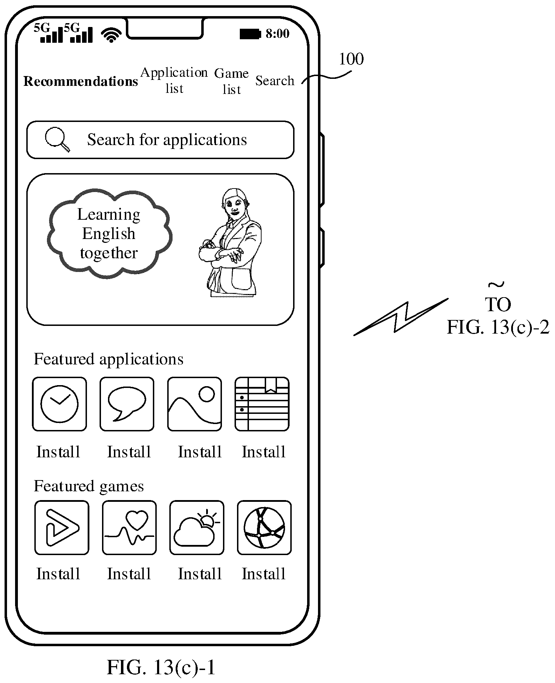

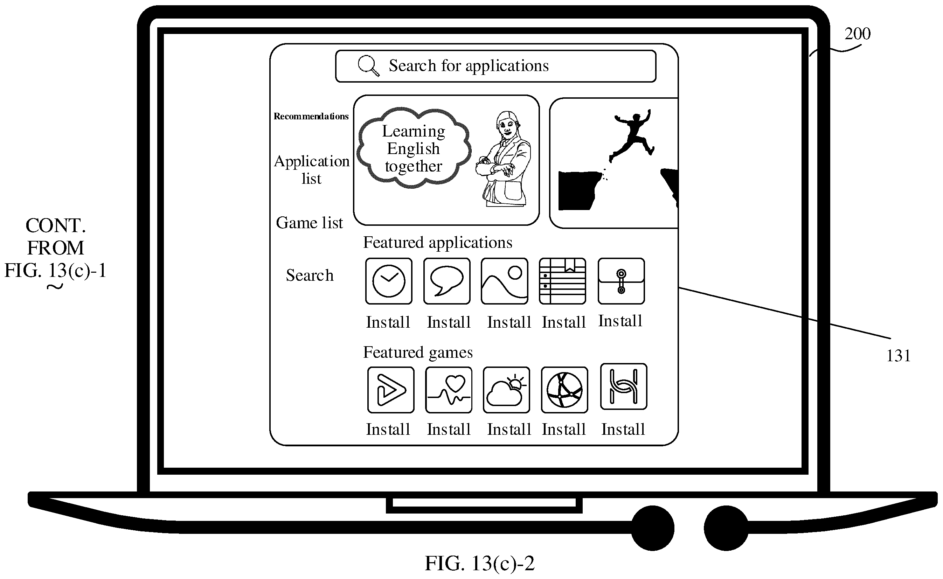

FIG. 13(a)-1 to FIG. 13(c)-2 are a diagram of a primary-secondary device switching scenario in a process in which a first electronic device runs a first application in a foldable mobile phone application running mode according to an embodiment of this application;

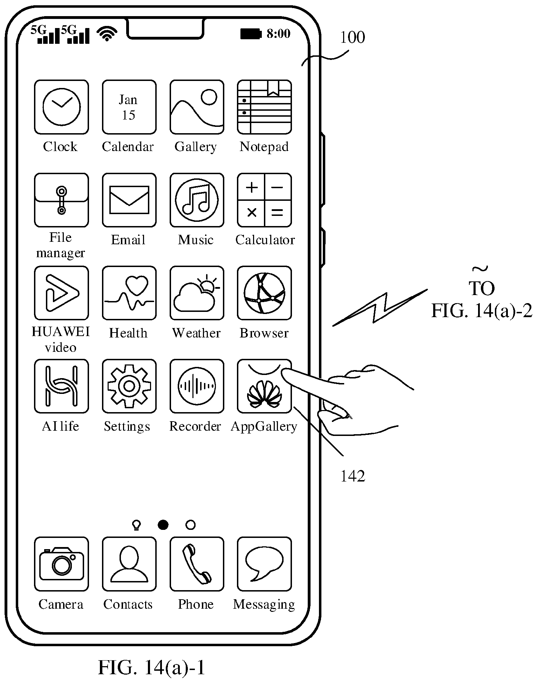

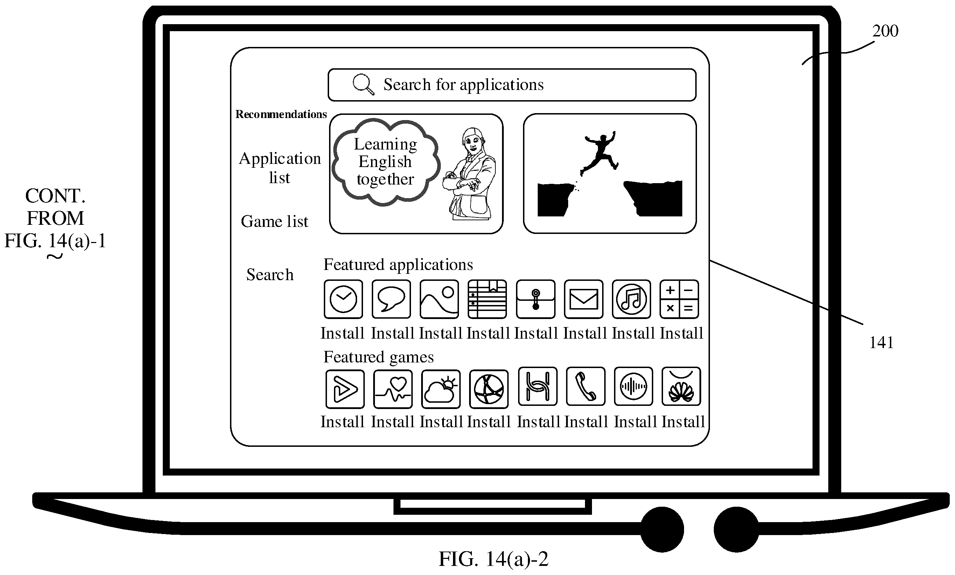

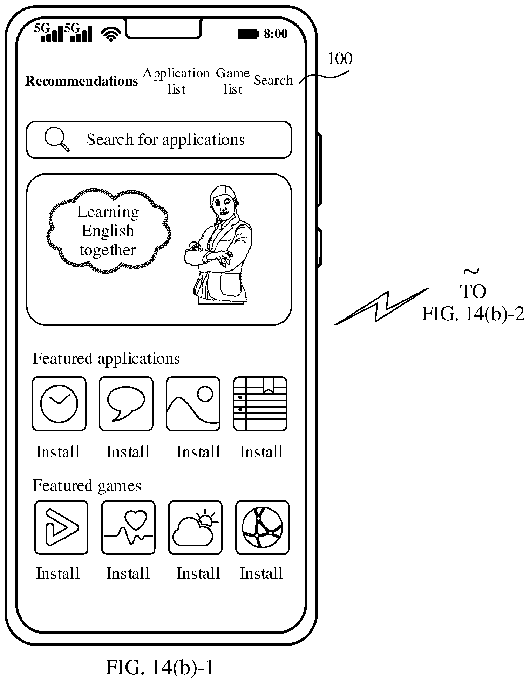

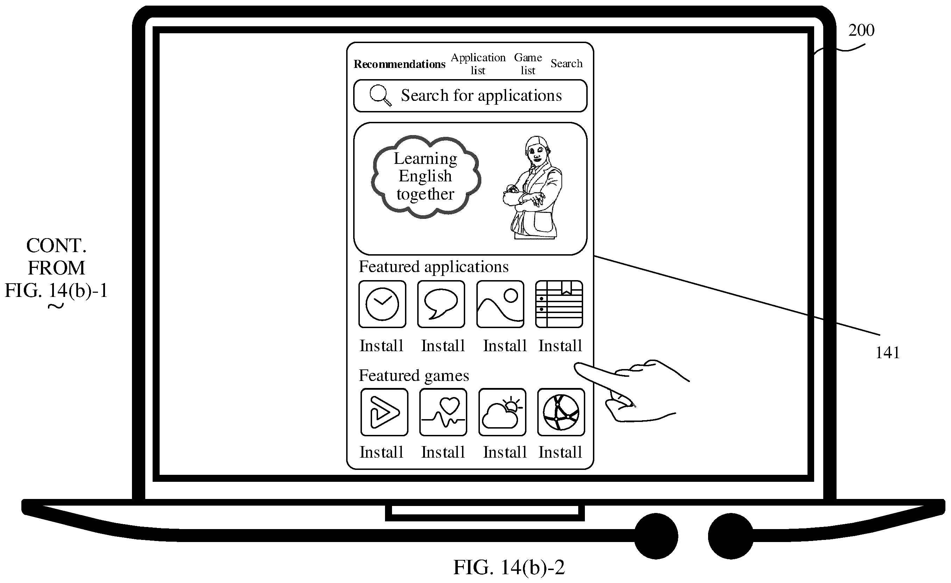

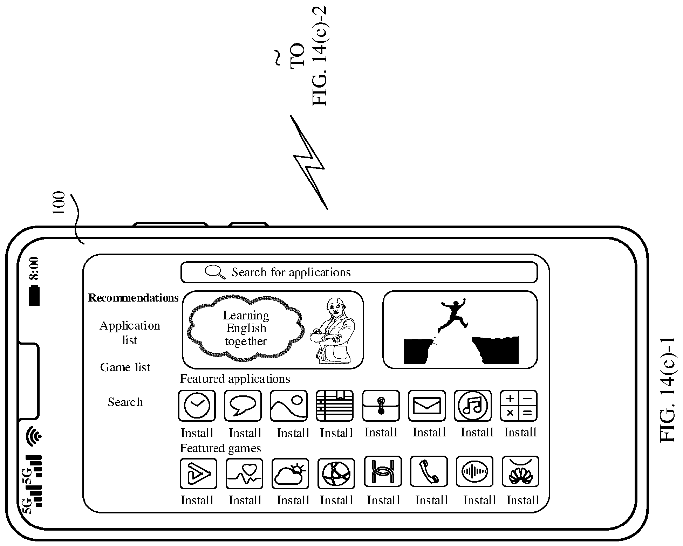

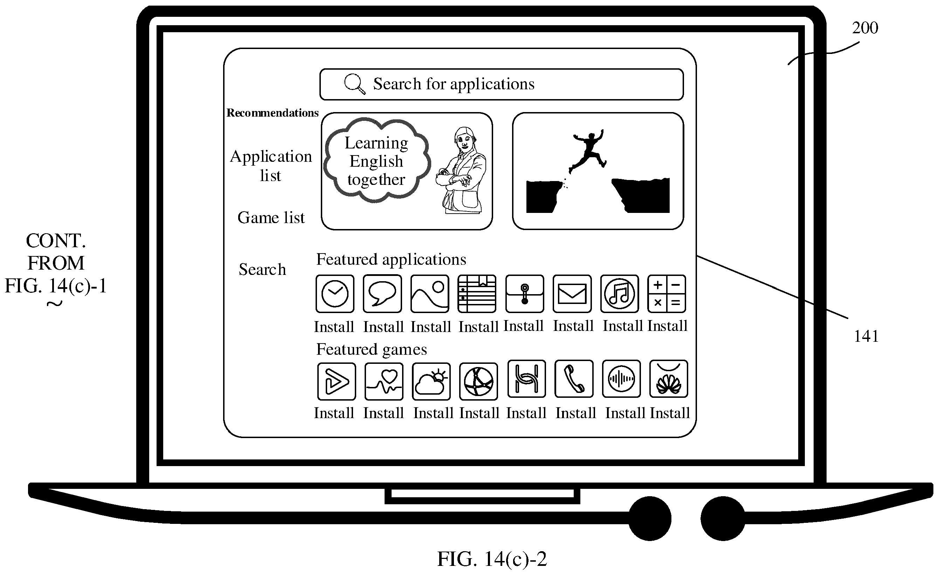

FIG. 14(a)-1 to FIG. 14(c)-2 are a diagram of a primary-secondary device switching scenario in a process in which a first electronic device runs a first application in a tablet application running mode according to an embodiment of this application;

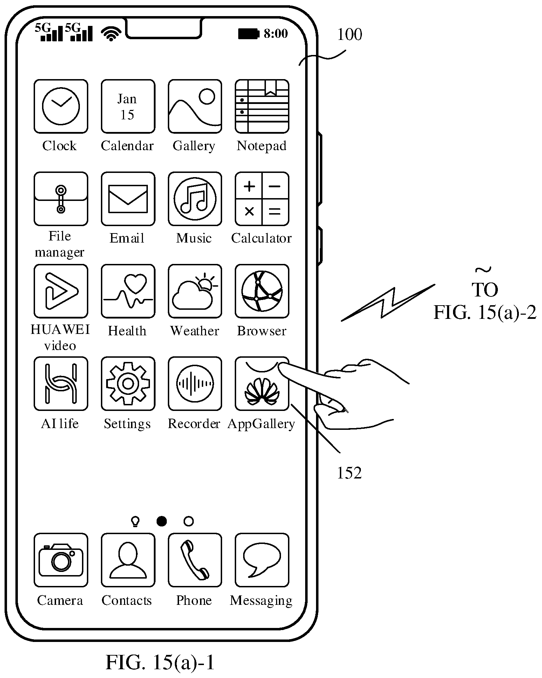

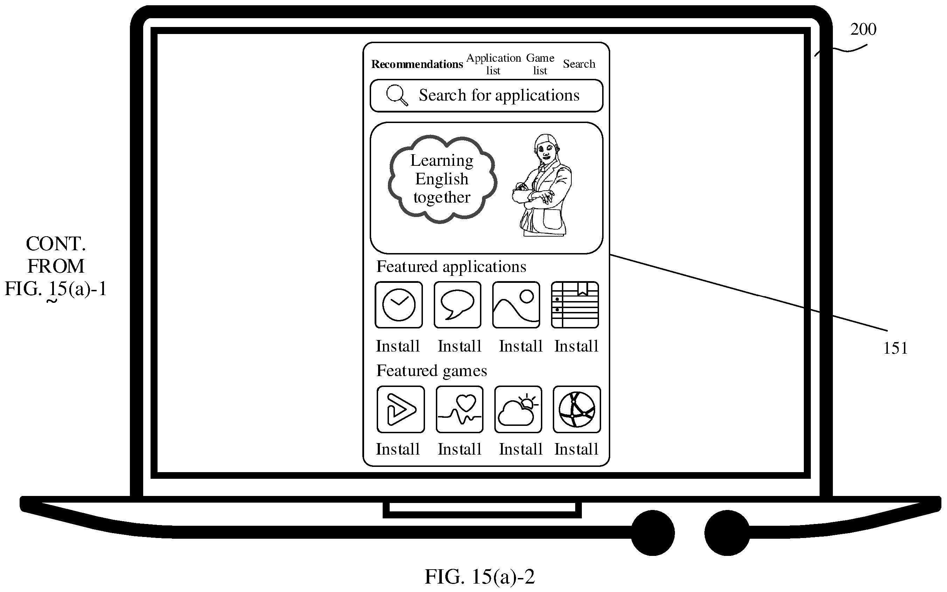

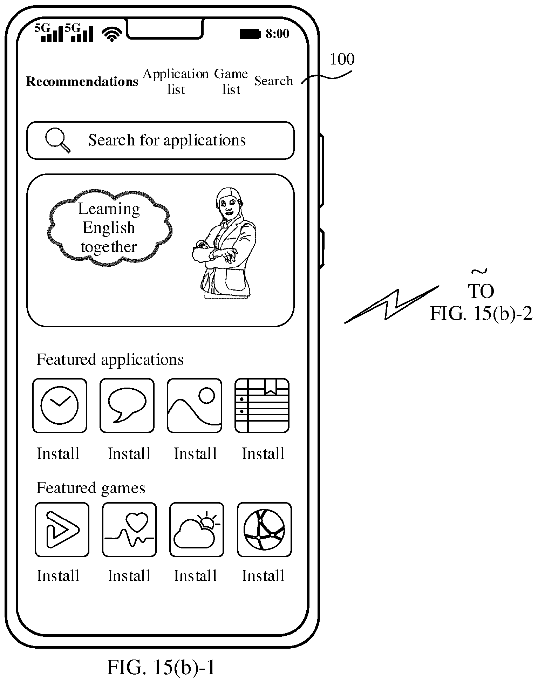

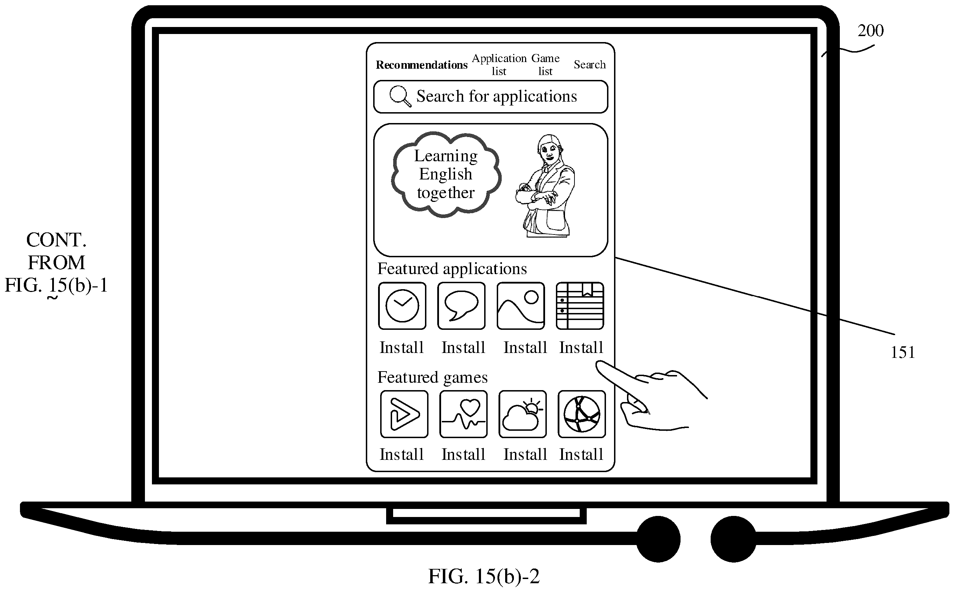

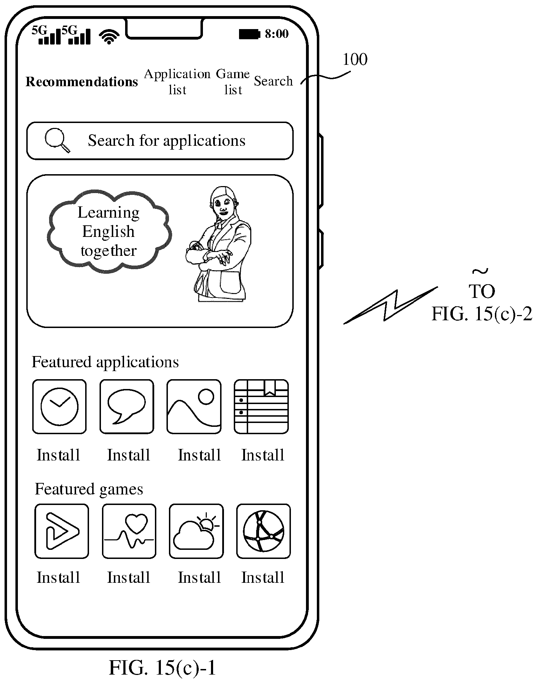

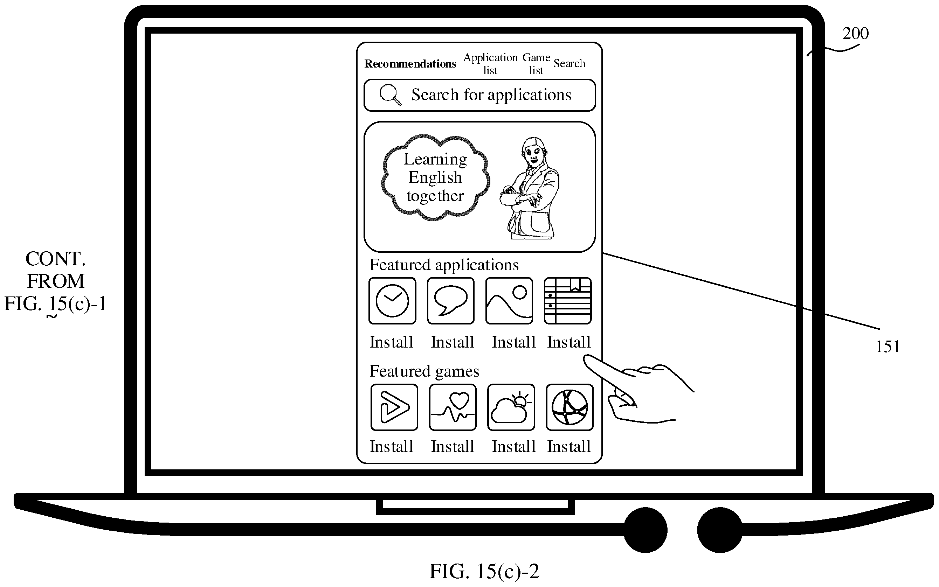

FIG. 15(a)-1 to FIG. 15(c)-2 are a diagram of a primary-secondary device switching scenario in a process in which a first electronic device runs a first application in a normal mobile phone application running mode according to an embodiment of this application;

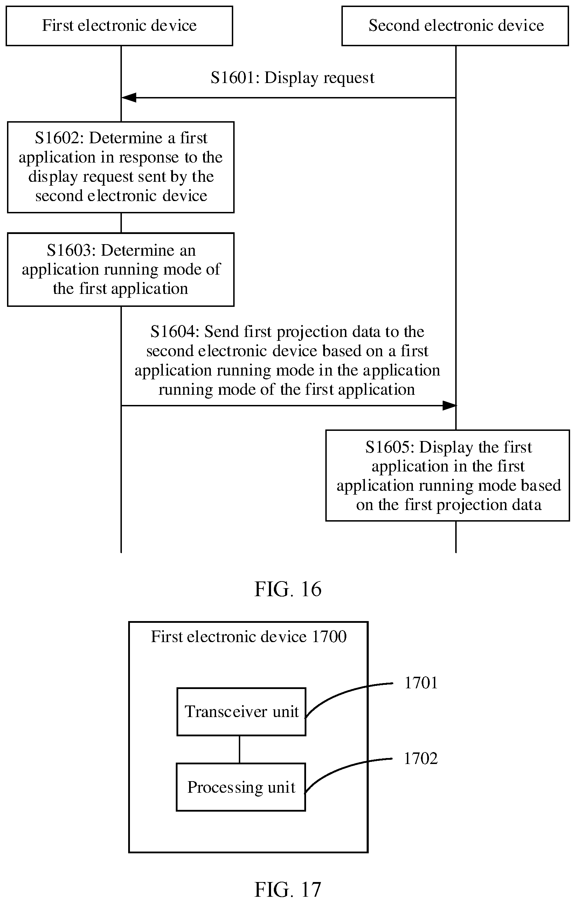

FIG. 16 is a flowchart of a projection method according to an embodiment of this application;
FIG. 17 is a diagram of a structure of a first electronic device according to an embodiment of this application; and

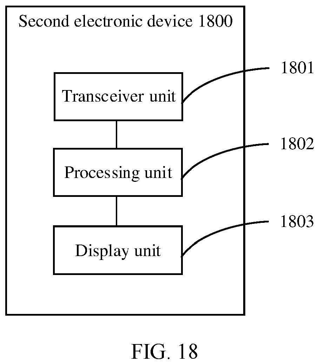

FIG. 18 is a diagram of a structure of a second electronic device according to an embodiment of this application.

## DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", and "this" of singular forms used in this specification and the appended claims of this application are intended to include expressions such as "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

In some scenarios, with development of terminal technologies, forms of electronic devices are increasingly diversified, for example, include a plurality of forms such as a mobile phone, a computer, and a large-screen device. Electronic devices of different forms have different features. For example, the mobile phone has good portability, and the computer has a good display effect. In daily life or an office process of a user, through cooperative work between a plurality of electronic devices, function use requirements of the user for different electronic devices are met.

For example, a projection connection is established between a first electronic device and a second electronic device. The second electronic device may receive, through the projection connection, projection data sent by the first electronic device, where the projection data is data of an application in the first electronic device. The second electronic device displays a corresponding application interface based on the projection data. In this way, the user may operate the first electronic device and the second electronic device through the second electronic device, to meet a use requirement of the user. The projection process includes, for example, push projection and screen mirroring. In a push projection process, display content of the second electronic device may not be synchronized with display content of the first electronic device. In a screen mirroring process, display content of the second electronic device is synchronized with display content of the first electronic device.

For another example, after establishing a connection to the first electronic device, the second electronic device may obtain application list information of the first electronic device. Then, the second electronic device may display a corresponding application icon in a projection window based on the application list information. In response to an operation performed by the user on the application icon, the second electronic device may request, from the first electronic device, to obtain application data corresponding to the application icon. Then, the second electronic device displays a corresponding application interface in the projection window based on the obtained application data.

It should be understood that the projection method in embodiments of this application may also be applied to screen sharing between devices. A same application is installed on both the first electronic device and the second electronic device. The same application may be understood as an application that is developed by a vendor for adaptation of electronic devices of different forms. After the first electronic device establishes the connection to the second electronic device, the first electronic device and the second electronic device may learn of the same application installed on each other, and present the same application on respective interfaces.

For example, HUAWEI video installed on a tablet computer and a mobile phone can be regarded as a same application. After the mobile phone is connected to the tablet computer, the mobile phone and the tablet computer each may obtain information about a list of applications installed on the peer device. HUAWEI video icons displayed on the mobile phone and the tablet computer each may have a marker, and the marker indicates that the peer device is also installed with HUAWEI video.

In some embodiments, in response to an operation performed by the user on an icon of a same application, the second electronic device may request the first electronic device to send application data corresponding to the icon of the same application. Then, the second electronic device starts or runs the same application based on the obtained application data, where a window of the same application may be understood as a sharing window. The second electronic device may display a corresponding application interface in the sharing window.

For example, as shown in FIG. 1A and FIG. 1B, a projection connection is established between a computer 101 and a mobile phone 102, and the computer 101 creates a projection window 11, and displays, in the projection window 11, projection content sent by the mobile phone 102 through the projection connection. In a current projection scenario, the display content of the mobile phone 102 is displayed in the projection window 11 after being proportionally zoomed in or out, causing a poor display effect.

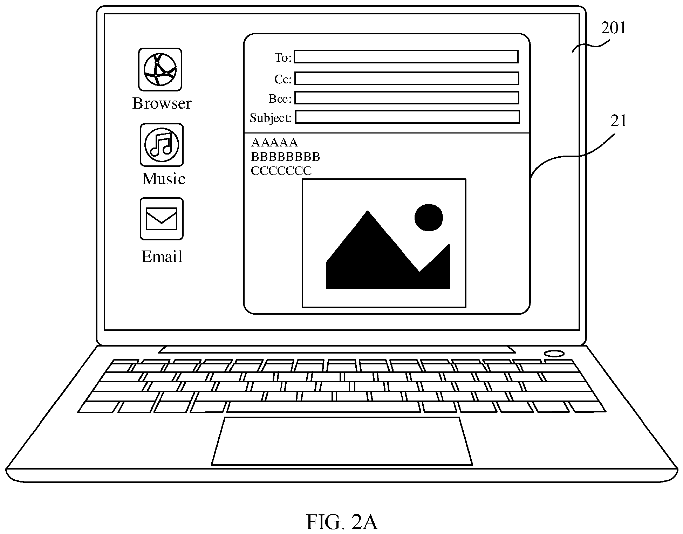

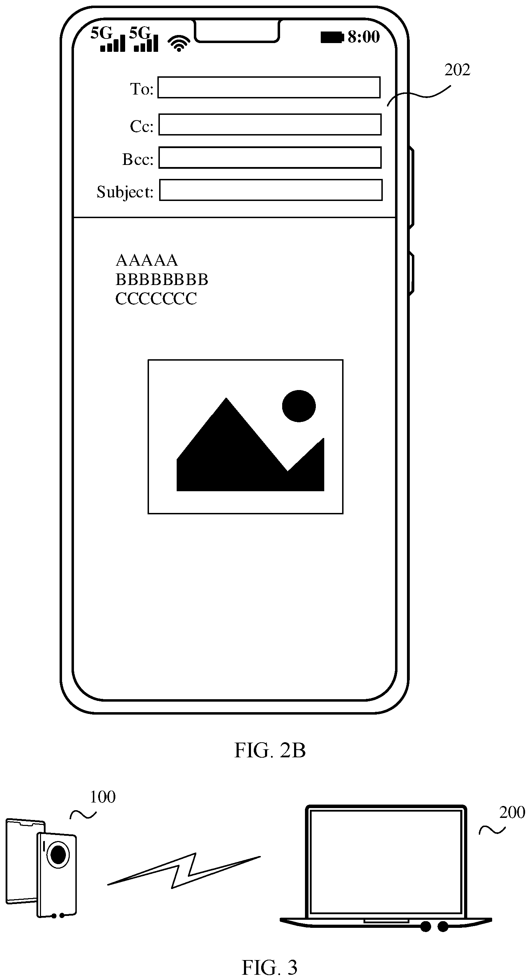

Therefore, a multi-screen collaboration method for cross-device migration is proposed. For example, as shown in FIG. 2A and FIG. 2B, a connection is established between a computer 201 and a mobile phone 202, and an email application is installed on both the computer 201 and the mobile phone 202. The mobile phone 202 starts the email application in response to an operation of a user, and receives an operation performed by the user on the email application. Then, in response to the operation of the user, the computer 201 starts the email application. After automatically obtaining a status and data of the email application in the mobile phone 202, the email application in the computer 201 may display an interface of the email application in a window 21, and continue to receive an operation performed by the user on the email application. Because the email application in the computer 201 is designed and developed for a computer, a good display effect can be brought to the user.

However, in the foregoing multi-screen collaboration scenario of cross-device migration, a corresponding projection application needs to be installed on both a source end device (for example, the mobile phone 202) and a receive end device (for example, the computer 201), and an application developer needs to perform cross-device migration adaptation on the application. Consequently, development difficulty is high. In addition, because the application is run in a plurality of electronic devices, information received by the application needs to be transmitted between the plurality of electronic devices, and there is a risk of user privacy leakage.

Therefore, embodiments of this application provide a projection method. In a projection process, a source end device selects, according to a preset rule based on an electronic device form supported by an application, a projection mode with a high priority for projection. Therefore, a receive end device can obtain a better projection effect, and user experience is improved.

FIG. 3 is a diagram of a communication system to which a projection method is applied according to an embodiment of this application. As shown in FIG. 3, the communications system includes a first electronic device 100 and a second electronic device 200. Optionally, the first electronic device 100 is a source end device, the second electronic device 200 is a receive end device, the first electronic device 100 sends projection data to the second electronic device 200, and the second electronic device 200 displays application projection content in a projection window based on the projection data.

Optionally, the first electronic device 100 or the second electronic device 200 may be, for example, a terminal device having a projection function, for example, a mobile phone, a computer, a tablet computer, a notebook computer, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed on the first electronic device 100 or the second electronic device 200 includes but is not limited to iOS®, Android®, Harmony®, Windows®, Linux®, or another operating system. A specific type of the first electronic device 100 or the second electronic device 200 and an operating system installed on the first electronic device 100 or the second electronic device 200 are not limited in this application.

In some embodiments, a wireless communication connection is established between the first electronic device 100 and the second electronic device 200. A wireless communication technology for establishing the wireless communication connection includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), ultra-wideband (ultra wide band, UWB), and the like.

Optionally, a communication connection may alternatively be established between a plurality of first electronic devices 100 or a plurality of second electronic devices 200 through a third-party device in a local area network. The third-party device is, for example, a router, a gateway, a smart device controller, or a server.

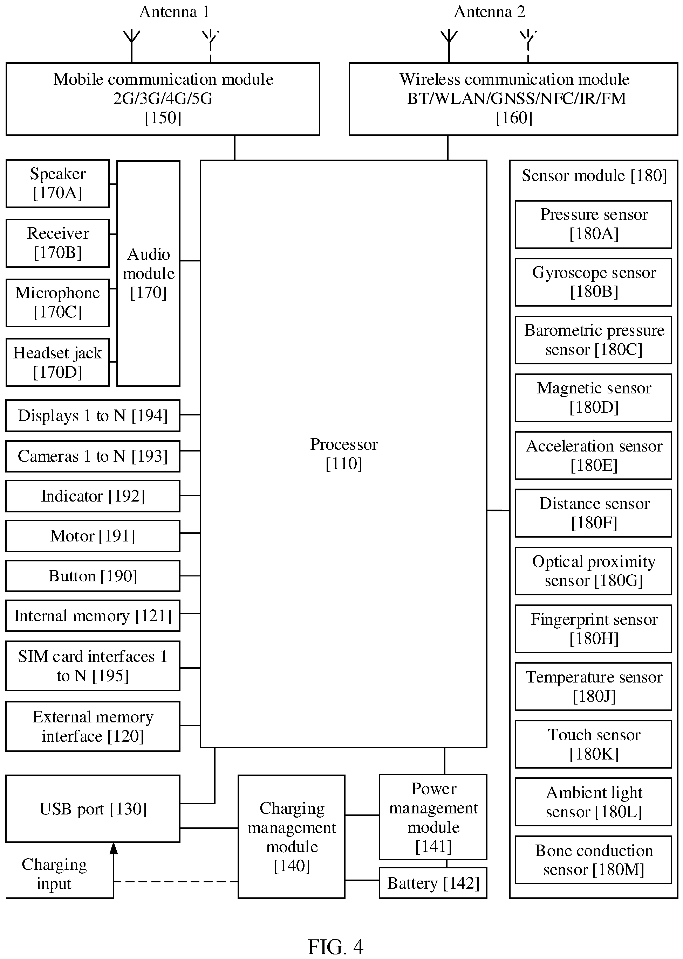

For example, FIG. 4 is a schematic diagram of a structure of the first electronic device 100 or the second electronic device 200.

The first electronic device 100 or the second electronic device 200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the first electronic device 100 or the second electronic device 200. In some other embodiments of this application, the first electronic device 100 or the second electronic device 200 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is a port that conforms to a USB standard specification, and may be specifically a mini USB port, a micro USB port, a USB type-C port, or the like. The USB port 130 may be used to connect to a charger to charge the first electronic device 100 or the second electronic device 200, or may be used to transmit data between the first electronic device 100 or the second electronic device 200 and a peripheral device, or may be used to connect to a headset for playing audio through the headset. The port may be further configured to connect to another first electronic device like an AR device.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the first electronic device 100 or the second electronic device 200. The charging management module 140 supplies power to the first electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

A wireless communication function of the first electronic device 100 or the second electronic device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 or the second electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the first electronic device 100 or the second electronic device 200. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The wireless communication module 160 may provide a wireless communication solution that is applied to the first electronic device 100 or the second electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the first electronic device 100 or the second electronic device 200 are coupled, and the antenna 2 and the wireless communication module 160 in the first electronic device 100 or the second electronic device 200 are coupled, so that the first electronic device 100 or the second electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The first electronic device 100 or the second electronic device 200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light emitting diode (active-matrix organic light-emitting diode, AMOLED), a flexible light-emitting diode (flexible light-emitting diode, FLED), a mini-LED, a micro-LED, a micro-OLED, or quantum dot light-emitting diodes (quantum dot light-emitting diodes, QLED). In some embodiments, the first electronic device 100 or the second electronic device 200 may include one or N displays 194, where N is a positive integer greater than 1.

In some examples, the second electronic device 200 receives, through the wireless communication module 160, the projection data sent by the first electronic device 100. Then, the second electronic device 200 determines a projection window size based on an application running mode corresponding to the projection data, creates a projection window on the display 194 based on the determined projection window size, and displays, through the projection window, the projection content corresponding to the obtained projection data.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 or the second electronic device 200 may include one or N cameras 193, where N is a positive integer greater than 1.

The external memory interface 120 may be used to connect to an external storage card, for example, a micro SD card, to extend a storage capability of the first electronic device 100 or the second electronic device 200. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (such as audio data and an address book) created during use of the first electronic device 100 or the second electronic device 200, and the like. In addition, the internal memory 121 may include a high-speed random access memory, or may include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications and data processing of the first electronic device 100 or the second electronic device 200.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110. The first electronic device 100 or the second electronic device 200 may perform, for example, music playing or recording by using the audio module 170.

The touch sensor 180K is also referred to as a "touch device". The touch sensor 180K may be disposed on the display 194, and the touch sensor and the display 194 constitute a touchscreen, which is also referred to as a "touch screen". The touch sensor 180K is configured to detect a touch operation performed on or near the touch sensor. The touch sensor 180K may transmit the detected touch operation to the application processor to determine a touch event type. The display 194 may provide a visual output related to the touch operation. In some other embodiments, the touch sensor 180K may alternatively be disposed on a surface of the first electronic device 100 or the second electronic device 200 at a location different from that of the display 194.

The pressure sensor 180A is configured to sense a pressure signal, and can convert the pressure signal into an electrical signal. In some embodiments, the pressure sensor 180A may be disposed in the display 194. When a touch operation is performed on the display 194, the first electronic device 100 or the second electronic device 200 detects intensity of the touch operation through the pressure sensor 180A. The first electronic device 100 or the second electronic device 200 may also calculate a touch position based on a detection signal of the pressure sensor 180A. In some embodiments, touch operations that are performed at a same touch location but have different touch operation intensity may correspond to different operation instructions.

The button 190 includes a power button, a volume button, and the like. The button 190 may be a mechanical button, or may be a touch button. The first electronic device 100 or the second electronic device 200 may receive a button input, and generate a button signal input related to a user setting and function control of the first electronic device 100 or the second electronic device 200.

The motor 191 may generate a vibration prompt. The motor 191 may be configured to provide an incoming call vibration prompt and a touch vibration feedback.

The indicator 192 may be an indicator light, and may be configured to indicate a charging status and a state of charge change, or may be configured to indicate a message, a missed call, a notification, and the like.

The SIM card interface 195 is used to connect to a SIM card. The first electronic device 100 or the second electronic device 200 may support one or N SIM card interfaces, where N is a positive integer greater than 1.

In some embodiments, a projection connection is established between the first electronic device 100 and the second electronic device 200 in a plurality of manners such as Bluetooth, a Wi-Fi network, and NFC. The first electronic device 100 may be used as a source end device, and send application data to the second electronic device 200 through the projection connection. The second electronic device 200 may create a projection window, and display a corresponding application interface in the projection window based on the received application data.

Optionally, in the projection process, display content of the first electronic device 100 is the same as or different from display content in the projection window of the second electronic device 200. For example, in a non-screen mirroring process, for example, a push projection process, display content of the first electronic device 100 is different from display content in the projection window of the second electronic device 200. For another example, in a screen mirroring process, display content of the first electronic device 100 is the same as display content in the projection window of the second electronic device 200.

Optionally, in the projection process, the second electronic device 200 receives interface display data sent by the first electronic device 100, and displays an application projection interface in the projection window based on the interface display data. Then, after detecting an operation performed by the user in the projection window, the second electronic device 200 may send operation information and coordinate information of the operation to the first electronic device 100. The operation information includes, for example, information about the operation like a tap or touch and hold operation. Then, the first electronic device 100 may determine the user operation based on the operation information and the coordinate information of the operation, and send corresponding interface display data to the second electronic device 200, so that the second electronic device 200 displays an interface that the user operation indicates to display.

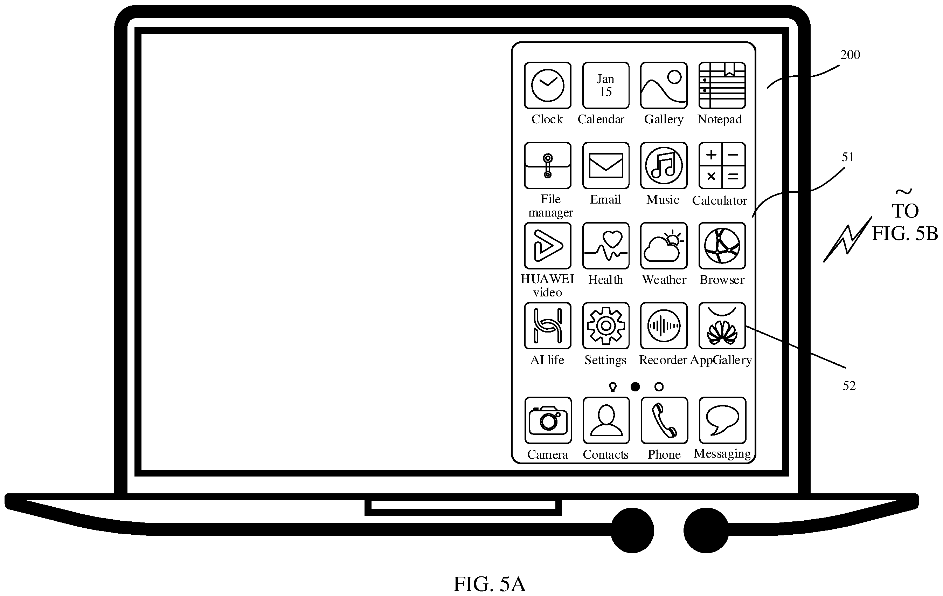

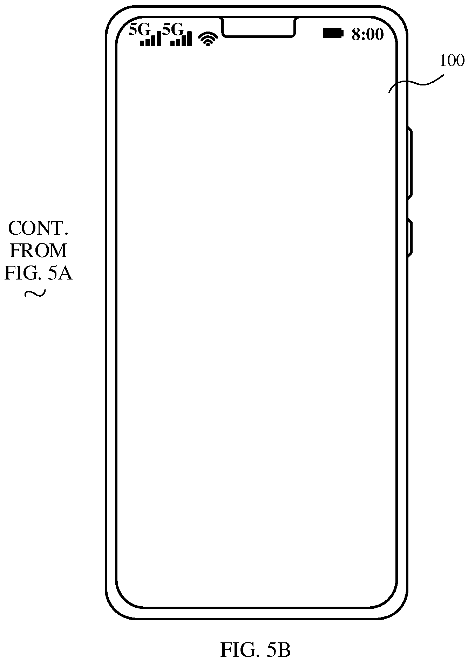

For example, as shown in FIG. 5A and FIG. 5B, after establishing the projection connection to the first electronic device 100, the second electronic device 200 displays a projection window 51, and displays a desktop of the first electronic device 100 in the projection window 51. Optionally, display content of the first electronic device 100 is different from display content in the projection window 51 of the second electronic device 200. The second electronic device 200 detects an operation of tapping the display content in the projection window 51 by the user, for example, an operation of tapping an application icon 52 of a first application, and sends a display request to the first electronic device 100. The display request carries coordinate information of the application icon 52 and operation information, for example, information about the tap operation. Correspondingly, after receiving the display request, the first electronic device 100 determines that the coordinate information carried in the display request corresponds to the first application, and after starting the first application, may send corresponding projection data to the second electronic device 200, for example, interface display data of the first application.

Alternatively, in a projection process, the second electronic device 200 may obtain application list information of the first electronic device 100, and then the second electronic device 200 may display, in the projection window based on the application list information, an application icon of an application in the first electronic device 100. Then, after detecting an operation of tapping the application icon in the projection window by the user, the second electronic device 200 may determine the application that the operation is used to request to start, and send a display request to the first electronic device 100. The display request is used to request to display the application corresponding to the application icon operated by the user. Then, the first electronic device 100 may send corresponding projection data to the second electronic device 200 based on the display request, so that the second electronic device 200 displays an interface that the user operation indicates to display.

For example, as shown in FIG. 5A and FIG. 5B, after establishing the projection connection to the first electronic device 100, the second electronic device 200 obtains the application list information of the first electronic device 100, and displays the desktop of the first electronic device 100 in the projection window 51. Then, after detecting an operation of tapping, by the user, the application icon 52 of the first application displayed in the projection window 51, the second electronic device 200 sends a display request to the first electronic device 100. The display request may carry information about the first application corresponding to the application icon 52. Correspondingly, after receiving the display request, the first electronic device 100 starts the first application, and sends the corresponding projection data to the second electronic device 200.

It should be noted that, in embodiments of this application, a projection scenario in each embodiment is described by using an example in which the first application is an application market. It may be understood that the first application may alternatively be another application. For example, the first application may be a system application like a desktop or a notepad, or may be a third-party application. This is not limited herein. Optionally, the first application is an application in the first electronic device 100, and the first application may not be installed on the second electronic device 200.

In addition, in the following example, the projection method provided in embodiments of this application is described by using an example in which the first electronic device 100 determines the first application in response to the user operation, and requests the second electronic device 200 to obtain the projection data of the first application. As described above, in the projection process, the second electronic device 200 may alternatively send the projection data to the first electronic device 100 after determining the first application in response to the display request sent by the first electronic device 100. This is not described by using examples one by one in embodiments of this application.

In some embodiments, different types of electronic devices (such as a mobile phone, a tablet, and a computer) have different color styles, screen sizes, interaction manners, system functions, and the like. In an application development process, a developer may configure a set of code and an installation package for a plurality of different types of electronic devices to share, so that an application supports the corresponding plurality of types of electronic devices. In this way, application ecosystems of different types of electronic devices are enriched, and application adaptability and development efficiency are improved.

Optionally, the application includes different application running modes, for example, a computer application running mode, a tablet application running mode, a foldable mobile phone application running mode, and a normal mobile phone application running mode. Different application running modes correspond to different types of electronic devices.

For example, in response to an operation of starting an application at the electronic device by the user, the electronic device may start and display an application interface in a corresponding application running mode based on a device type of the electronic device. For example, the first electronic device 100 is a mobile phone, and the first application is installed. In response to an operation of starting the first application on the first electronic device 100 by the user, the first electronic device 100 runs the first application in the normal mobile phone application running mode.

Optionally, the first application that is run in different application running modes has different interface layouts. It should be understood that, after the application is started, an interface layout may include distribution data of display elements of the application.

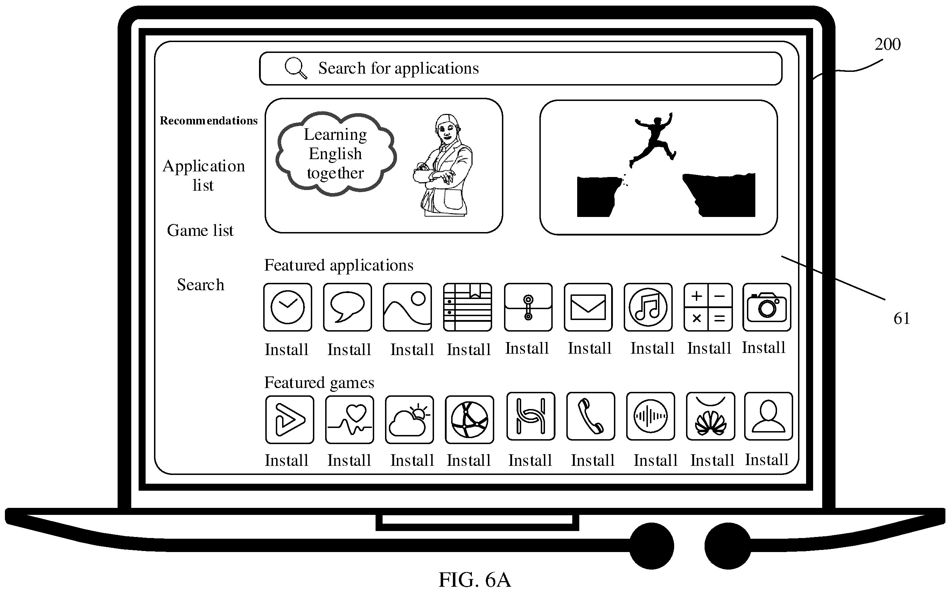

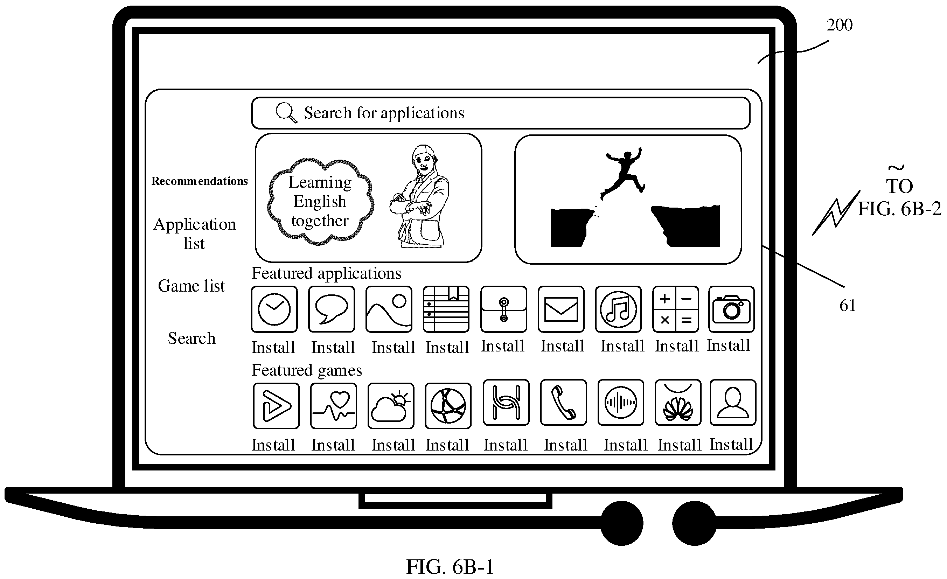

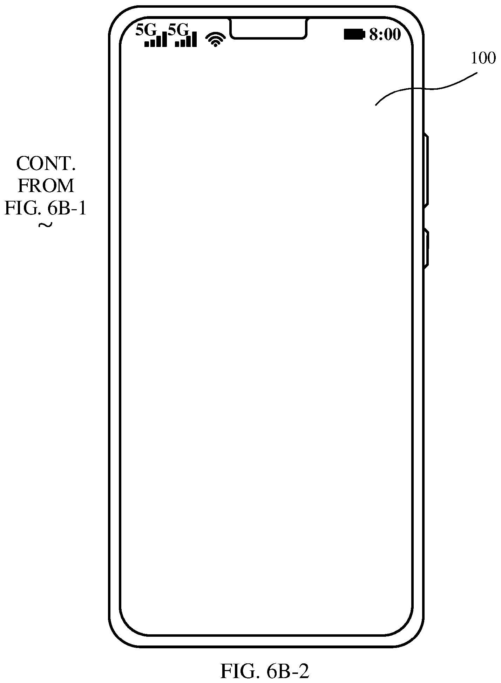

For example, as shown in FIG. 6A, the first application is run in the computer application running mode, and a home page of the first application is displayed through projection. As shown in FIG. 7A, the first application is run in the tablet application running mode, and the home page of the first application is also displayed through projection. As shown in FIG. 8, the first application is run in the foldable mobile phone application running mode, and the home page of the first application is also displayed through projection. As shown in FIG. 9A, the first application is run in the normal mobile phone application running mode, and the home page of the first application is also displayed through projection.

It can be learned that, in different application running modes, the home page of the first application has different interface layouts. For example, in the computer application running mode, the tablet application running mode, the foldable mobile phone application running mode, and the normal mobile phone application running mode, display elements in the home page of the first application decrease sequentially.

It should be noted that, in embodiments of this application, an example in which the application running mode includes the computer application running mode, the tablet application running mode, the foldable mobile phone application running mode, and the normal mobile phone application running mode is used to describe projection processes of the application in different application running modes. It may be understood that the application may further support another application running mode, to match another type of electronic device.

In some embodiments, in the projection process, after receiving the display request sent by the second electronic device 200, the first electronic device 100 may determine that the display request is used to request to display the first application, and determine the application running mode supported by the first application. Then, the first electronic device 100 determines, in a preset manner, an application running mode to be used by the first application in the projection process. The first electronic device 100 runs the first application in a background in the determined application running mode, and sends projection data of a window size corresponding to the corresponding application running mode to the second electronic device 200, so that the second electronic device 200 displays the first application through projection in the window size corresponding to the application running mode.

For example, as shown in the following Table 1, in different application running modes, window sizes in which the first electronic device 100 runs the first application in the background are different. For example, in the tablet application running mode, the first electronic device 100 runs the first application in the background in a default screen size of a tablet. In this way, after obtaining the projection data, the second electronic device 200 creates a projection window based on the default screen size of the tablet, to display the first application.

Optionally, the first electronic device 100 determines that a device type corresponding to the application running mode of the first application is the same as a device type of the first electronic device 100, and may run the first application in the background in a screen size of the first electronic device 100. For example, the first electronic device 100 is a mobile phone, and the first electronic device 100 determines that the application running mode in which the first application is run in the background is the normal mobile phone application running mode. In this case, the window size in which the first electronic device 100 runs the first application in the background is the screen size of the first electronic device 100.

Table 1

| Application running mode | Window size in which the first application is run in the background |
|---|---|
| Computer application running mode | Default window size of a computer application |
| Tablet application running mode | Default screen size of a tablet |
| Foldable mobile phone application running mode | Default screen size of a foldable mobile phone in an unfolded state |
| Normal mobile phone application running mode | Default screen size of a normal mobile phone |

For example, as shown in the following Table 2, window sizes, for example, window parameters, in which the first application is run in the background in different application running modes are listed. It should be understood that the parameters in the following Table 2 are merely examples for description, and do not constitute a limitation on the window size in which the first application is run in the background in embodiments of this application.

Table 2

| Application running mode | Window parameters for running the first application in the background | | |
|---|---|---|---|
| | Width (in a unit of device independent pixels (device independent pixels, DPs)) | Height (dp) | Dots per inch (dots per inch, DPI) |
| Computer application running mode | Provided by a computer | | |
| Tablet application running mode | 1024 | 640 | 400 |
| Foldable mobile phone application running mode | 677 | 763 | 520 |
| Normal mobile phone application running mode | 360 | 780 | 480 |

Optionally, as shown in Table 1, in different application running modes, window sizes in which the application is run are different. Different content may be displayed in different window sizes. For example, a larger window size indicates richer display content, and different window sizes may bring different display experience to the user. Therefore, a priority sequence of different application running modes may be determined based on window sizes. For example, a larger window size can bring better display experience to the user, and therefore a corresponding application running mode may have a higher priority. For example, the four application running modes shown in the foregoing Table 1 may be sequentially the computer application running mode, the tablet application running mode, the foldable mobile phone application running mode, and the normal mobile phone application running mode in descending order of priority.

Optionally, the foregoing preset manner includes, for example, that the first electronic device 100 determines that a to-be-used application running mode is an application running mode with a highest priority in the application running mode supported by the first application. In this way, the second electronic device 200 may bring optimal display experience to the user.

For example, in the scenario shown in FIG. 5A and FIG. 5B, after receiving the display request sent by the second electronic device 200, the first electronic device 100 determines that an application that the user indicates to perform projection is the first application. Then, the first electronic device 100 determines, by using a configuration file of the first application, querying an application market, or the like, that the first application supports a plurality of application running modes.

For example, as shown in FIG. 6A, the first electronic device 100 determines that the application running mode supported by the first application includes the computer application running mode, the tablet application running mode, the foldable mobile phone application running mode, and the normal mobile phone application running mode. In this case, the first electronic device 100 determines to run the first application in the background in the computer application running mode with a highest priority. As shown in Table 1, the first electronic device 100 runs the first application in the background in the default window size of the computer application, and after determining corresponding projection data, sends the projection data to the second electronic device 200. As shown in FIG. 6A, the second electronic device 200 determines, based on the obtained projection data, a window size (for example, the default window size of the computer application) corresponding to the projection data, creates a corresponding projection window 61 based on the window size, and displays a first application interface in the projection window 61 based on the projection data.

Optionally, an application display response sent by the first electronic device 100 to the second electronic device 200 carries the projection data and the window size, and the second electronic device 200 may determine the window size based on the application display response, to create the new projection window. Alternatively, the second electronic device 200 determines the window size based on the projection data, to create the new projection window.

For another example, as shown in FIG. 7A, the first electronic device 100 determines that the application running mode supported by the first application includes the tablet application running mode, the foldable mobile phone application running mode, and the normal mobile phone application running mode. In this case, the first electronic device 100 determines to run the first application in the background in the tablet application running mode with a highest priority. As shown in Table 1, the first electronic device 100 runs the first application in the background in the default screen size of the tablet, and after determining corresponding projection data, sends the projection data to the second electronic device 200. As shown in FIG. 7A, the second electronic device 200 determines, based on the obtained projection data, a window size (for example, the default screen size of the tablet) corresponding to the projection data, creates a corresponding projection window 71 based on the window size, and displays a first application interface in the projection window 71 based on the projection data.

For another example, as shown in FIG. 8, the first electronic device 100 determines that the application running mode supported by the first application includes the foldable mobile phone application running mode and the normal mobile phone application running mode. In this case, the first electronic device 100 determines to run the first application in the background in the foldable mobile phone application running mode with a higher priority. As shown in Table 1, the first electronic device 100 runs the first application in the background in the default screen size of the foldable mobile phone in the unfolded state, and after determining corresponding projection data, sends the projection data to the second electronic device 200. As shown in FIG. 8, the second electronic device 200 determines, based on the obtained projection data, a window size (for example, the default screen size of the foldable mobile phone in the unfolded state) corresponding to the projection data, creates a corresponding projection window 81 based on the window size, and displays a first application interface in the projection window 81 based on the projection data.

For another example, as shown in FIG. 9A, the first electronic device 100 determines that the application running mode supported by the first application includes the normal mobile phone application running mode. In this case, the first electronic device 100 determines to run the first application in the background in the normal mobile phone application running mode. As shown in Table 1, the first electronic device 100 runs the first application in the background in the default screen size of the normal mobile phone, and after determining corresponding projection data, sends the projection data to the second electronic device 200. As shown in FIG. 9A, the second electronic device 200 determines, based on the obtained projection data, a window size, for example, the default screen size of the normal mobile phone, corresponding to the projection data, creates a corresponding projection window 91 based on the window size, and displays a first application interface in the projection window 91 based on the projection data.

As shown in the content in FIG. 6A, FIG. 7A, FIG. 8, and FIG. 9A, the first electronic device 100 makes full use of an application ecosystem, and selects, based on the application running mode supported by the first application, a better application running mode from the application running mode to run the first application in the background. Therefore, more display content is displayed on the second electronic device 200, and better display experience is provided for the user.

In some embodiments, the first application is run on the first electronic device 100. In view of this, the developer may not need to perform cross-device migration adaptation in the application development process, to reduce a development workload. In addition, the first application may be prevented from being run on the second electronic device 200, to reduce a risk of information leakage.

Optionally, the foregoing preset manner may further include, for example, that the first electronic device 100 determines a to-be-used application running mode based on a device type of the second electronic device 200 and the application running mode supported by the first application. For example, the first electronic device 100 selects an application running mode that corresponds to the device type of the second electronic device 200 and that has a highest priority in the application running mode supported by the first application. In this way, a projection window size of the second electronic device 200 matches the device type of the second electronic device. This improves a projection display effect of the second electronic device 200, and further improves user experience.

In a process of establishing the projection connection to the second electronic device 200, the first electronic device 100 may determine the device type of the second electronic device 200. Alternatively, the first electronic device 100 may determine the device type of the second electronic device 200 based on device type information carried in the received display request sent by the second electronic device 200. Alternatively, the first electronic device 100 sends a request to the second electronic device 200, where the request is used to request to obtain the device type of the second electronic device 200. Alternatively, the first electronic device 100 may determine the device type of the second electronic device 200 in another manner.

For example, the first electronic device 100 determines that the application running mode supported by the first application includes the computer application running mode, the tablet application running mode, the foldable mobile phone application running mode, and the normal mobile phone application running mode, and determines that the device type of the second electronic device 200 is a tablet. The first electronic device 100 determines that an application running mode corresponding to the tablet is the tablet application running mode, and the application running mode supported by the first application includes the tablet application running mode. In this case, as shown in Table 1, the first electronic device 100 runs the first application in the background in the default screen size of the tablet, and sends the corresponding projection data to the second electronic device 200, so that the second electronic device 200 creates the projection window based on the default screen size of the tablet, and displays the first application interface.

For another example, the first electronic device 100 determines that the application running mode supported by the first application includes the tablet application running mode, the foldable mobile phone application running mode, and the normal mobile phone application running mode, and determines that the device type of the second electronic device 200 is a computer. The first electronic device 100 determines that an application running mode corresponding to the computer is the computer application running mode, the application running mode supported by the first application does not include the computer application running mode, and a priority of the computer running mode is higher than a priority of the application running mode supported by the first application. In this case, the first electronic device 100 may determine that the to-be-used running mode is an application running mode with a highest priority in the application running mode supported by the first application, for example, the tablet application running mode. As shown in Table 1, the first electronic device 100 runs the first application in the background in the default screen size of the tablet, and sends the corresponding projection data to the second electronic device 200, so that the second electronic device 200 creates the projection window based on the default screen size of the tablet, and displays the first application interface.

In some embodiments, in the projection process, after detecting an operation performed by the user in the projection window, the second electronic device 200 may generate a corresponding input event, and send the input event to the first electronic device 100. In this case, the first electronic device 100 may send, to the second electronic device 200 based on the input event, application display content indicated by the user operation.

Optionally, the input event generated by the second electronic device 200 further includes coordinate information corresponding to the user operation. In this way, the first electronic device 100 may run a corresponding function of the application in the background based on the coordinate information, to generate the projection data. For example, the first electronic device 100 determines, based on the coordinate information, that the user performs an operation on the application icon of the first application, and may start the first application in the background, to generate the projection data corresponding to the first application.

For example, as shown in FIG. 10, the second electronic device 200 creates a coordinate system, and converts coordinates of the detected user operation into corresponding coordinates of the first electronic device 100. An example in which the first electronic device 100 is a mobile phone and the second electronic device 200 is a computer is used. In this case, the computer may determine, according to the following formula, coordinate information corresponding to a user operation in the mobile phone, to send the coordinate information to the mobile phone:

$$x\_phone = x\_pc / (w\_pc / w\_phone);$$

and

$$y\_phone = y\_pc / (h\_pc / h\_phone).$$

Herein, x_pc and y_pc indicate coordinates on the computer, x_phone and y_phone indicate coordinates on the mobile phone, w_pc and h_pc indicate a width and a height of a window of the computer, and w_phone and h_phone indicate a width and a height of a window in which the first application is run in the background of the mobile phone.

Optionally, in the process of establishing the projection connection to the second electronic device 200, the first electronic device 100 may obtain a screen size of the peer device.

Optionally, in response to the user operation, the second electronic device 200 may determine the corresponding coordinate information according to the foregoing formula, and then send the coordinate information to the first electronic device 100. Alternatively, after detecting the user operation, the second electronic device 200 may directly send the coordinate information of the user operation to the first electronic device 100, and then the first electronic device 100 converts, according to the foregoing formula, the obtained coordinate information into coordinate information applicable to the first electronic device.

In some embodiments, the second electronic device 200 may detect a gesture operation of the user in the projection window. In this case, the second electronic device 200 may map the detected gesture operation to a corresponding operation of the first electronic device 100, so that the first electronic device 100 determines a meaning of the user operation. Alternatively, the second electronic device 200 sends the detected gesture operation to the first electronic device 100, and the first electronic device 100 maps the gesture operation to a corresponding operation of the first electronic device 100, to determine a meaning of the user operation.

Optionally, after detecting the gesture operation, the second electronic device 200 may send, to the first electronic device 100, an input event that includes a gesture operation event and coordinate information, to obtain corresponding application display data.

For example, as shown in the following Table 3, an example in which the first electronic device 100 is a mobile phone and the second electronic device 200 is a computer is used. The computer may support at least one of a touchscreen gesture input, a mouse input, and a touch panel input. After detecting an operation performed by the user in the projection window, the computer may map the operation to an input event corresponding to the mobile phone, and send the input event to the mobile phone, to display, in the projection window, an application interface indicated by the user operation.

For example, as shown in the following Table 3, when detecting that a touchscreen gesture of the user is a tap with one finger, the computer may map the user operation to a tap operation. Alternatively, the computer directly sends the detected user operation to the mobile phone, and then the mobile phone maps the user operation to an input event on the mobile phone. For example, the computer detects that a touchscreen gesture of the user is a tap with one finger, and sends the user operation to the mobile phone. The mobile phone maps the user operation to a tap operation.

**Table 3**

| First electronic device 100 (mobile phone) | Second electronic device 200 (computer) | | |
|---|---|---|---|
| Basic input | Touchscreen gesture | Mouse | Touch panel |
| Tap | Tap with one finger | Tap a left button | Lightly tap with one finger |
| Touch and hold | Touch and hold | Touch and hold the left button | Touch and hold with one finger |
| Double-tap | Double-tap | Double-tap the left button | Lightly double-tap |
| Swipe | Slide quickly with one finger | Scroll a wheel up and down quickly | Swipe quickly with two fingers |
| Scroll and pan | Slide with one finger | Scroll the wheel up and down | Slide with two fingers |
| Zoom in or out | Pinch or spread with two fingers | Press Ctrl and scroll the wheel | Pinch or spread with two fingers |

(continued)

| First electronic device 100 (mobile phone) | Second electronic device 200 (computer) | | |
|---|---|---|---|
| Basic input | Touchscreen gesture | Mouse | Touch panel |
| Rotate | Move two fingers around each other | - | Move two fingers around each other |

In some embodiments, the second electronic device 200 may adjust the projection window size in response to an operation of adjusting the projection window size by the user, and display the projection content based on an adjusted projection window size.

Optionally, an application in different application running modes may support user-defined window size adjustment or proportional window size adjustment. The computer application running mode, the tablet application running mode, the foldable mobile phone application running mode, and the normal mobile phone application running mode are still used as examples. The first application that is run in the computer application running mode supports user-defined window size adjustment, and allows the user to separately adjust a width and a height of a window. The first application that is run in the tablet application running mode, the foldable mobile phone application running mode, or the normal mobile phone application running mode supports proportional window size adjustment, and only allows the user to adjust a width and a height of a window at the same time, and in the window size adjustment process, an aspect ratio of the window remains unchanged.

For example, after detecting the operation of adjusting the projection window size by the user, the second electronic device 200 determines that an application running mode of the first application displayed in the current projection window supports user-defined window size adjustment. In this case, the second electronic device 200 may allow the user to separately adjust the width and the height of the projection window, generate a window size adjustment event corresponding to the user operation, and send the window size adjustment event to the first electronic device 100. The first electronic device 100 may generate corresponding application projection data based on the window size adjustment event, to display a new application interface in the projection window whose window size is adjusted and that is of the second electronic device 200.

For example, in the scenario shown in FIG. 6A, the first electronic device 100 runs the first application in the background in the computer application running mode, to display a projection interface of the first application in the projection window 61 of the second electronic device 200. After detecting an operation of adjusting a size of the projection window 61 by the user, the second electronic device 200 may generate a corresponding window size adjustment event, and send the corresponding window size adjustment event to the first electronic device 100. As shown in FIG. 6B-1 and FIG. 6B-2, the first electronic device 100 determines new application projection data in response to the window size adjustment event, and sends the new application projection data to the second electronic device 200. In this way, the second electronic device 200 can display a new first application interface in the projection window 61 whose window size is adjusted.

For another example, after detecting the operation of adjusting the projection window size by the user, the second electronic device 200 determines that an application running mode of the first application displayed in the current projection window supports proportional window size adjustment. In this case, the second electronic device 200 may proportionally zoom in or out the projection window and display content in the projection window in response to the user operation, so that the display content matches an adjusted projection window size. In the process of adjusting the projection window size, the first electronic device 100 does not need to respond to the operation of adjusting the projection window size by the user.

For example, in the scenario shown in FIG. 7A, the first electronic device 100 runs the first application in the background in the tablet application running mode, to display a projection interface of the first application in the projection window 71 of the second electronic device 200. After the second electronic device 200 detects an operation of adjusting a size of the projection window 71 by the user, as shown in FIG. 7B, the second electronic device 200 may proportionally zoom in or out the projection window 71 and display content in the projection window 71 based on the user operation, so that an adjusted projection window meets a user requirement.

In this way, the projection window is adjusted, so that projection on the second electronic device 200 can better meet a use habit of the user, and user experience is further improved.

In some embodiments, in response to the operation of adjusting the projection window size on the second electronic device 200 by the user, the first electronic device 100 determines that an adjusted projection window size corresponds to a window size corresponding to another application running mode, and may switch the application running mode of the first application. In this way, in the projection process, the projection content better matches the projection window size, and the second electronic device 200 can obtain a better display effect of the first application.

For example, in the process in which the first electronic device 100 projects the first application to the second electronic device 200 in the computer application running mode, the second electronic device 200 detects an operation of adjusting the projection window size by the user, generates a corresponding window size adjustment event, and sends the corresponding window size adjustment event to the first electronic device 100. The first electronic device 100 determines, based on the window size adjustment event, that the user indicates to reduce the projection window, and determines that a reduced window size corresponds to a window size in which the first application is run in the background in the tablet application running mode. In this case, the first electronic device 100 may switch the application running mode of the first application from the computer application running mode to the tablet application running mode, and then run the first application in the background in the default screen size of the tablet corresponding to the tablet application running mode, and the first application is displayed on the second electronic device 200 through projection.

Subsequently, for example, the second electronic device 200 further detects an operation of adjusting the projection window size by the user, generates a corresponding window size adjustment event, and sends the corresponding window size adjustment event to the first electronic device 100. The first electronic device 100 determines, based on the window size adjustment event, that the user indicates to enlarge the projection window, and determines that an enlarged window size corresponds to a window size in which the first application is run in the background in the computer application running mode. In this case, the first electronic device 100 may switch the application running mode of the first application from the tablet application running mode back to the computer application running mode, and then run the first application in the background in the default window size of the computer application corresponding to the computer application running mode, and the first application is displayed on the second electronic device 200 through projection.

In some embodiments, after receiving the projection data sent by the first electronic device 100, the second electronic device 200 may create the new projection window, to display the first application interface in the new projection window based on the projection data. Alternatively, the second electronic device 200 may adjust, based on the projection data, the size of the projection window on which the user operation is detected, to display the first application interface. Optionally, the second electronic device 200 may display a preset quantity of projection windows.

For example, in the scenario shown in FIG. 5A and FIG. 5B, in the process of displaying, in the projection window 51, the desktop projected by the first electronic device 100, the second electronic device 200 sends the display request to the first electronic device 100 after detecting the operation of tapping the application icon 52 of the first application by the user. Then, the second electronic device 200 may obtain the projection data determined by the first electronic device 100 according to the methods in the examples of the foregoing embodiments. As shown in FIG. 9A, the second electronic device 200 displays the first application interface in the projection window 91. The projection window 91 is the original projection window 51, or the projection window 91 is a projection window obtained after a window size of the projection window 51 is adjusted.

Alternatively, as shown in FIG. 9B, when displaying the original projection window 51, the second electronic device 200 creates a projection window 92 based on the received projection data, to display the first application interface. Optionally, the second electronic device 200 may close a corresponding projection window based on a user operation.

In this way, the second electronic device 200 may perform projection display based on a user operation, to meet a use requirement of the user.

Optionally, in the foregoing embodiments, the projection process is described by using an example in which the second electronic device 200 requests to obtain projection data of an application in the first electronic device 100 in response to an operation performed by the user on a projection desktop. It may be understood that the first electronic device 100 may alternatively determine a to-be-projected application based on an operation performed by the user on the first electronic device 100, to determine a corresponding application running mode, generate projection data, and implement application projection display on the second electronic device 200. For the process of determining the application running mode, refer to related content described in the foregoing embodiments. Details are not described herein again.

In a scenario, in a projection process, the first electronic device 100 and the second electronic device 200 may not need to support simultaneous display of a projection application. In this way, the first application in the first electronic device 100 is displayed on the second electronic device 200 through projection, and running of another application on the first electronic device 100 is not affected.

In some embodiments, in the projection process, the first electronic device 100 detects an operation of starting the first application on the first electronic device 100 by the user, and may prompt the user that the first application has been projected to the second electronic device 200 and the first application needs to be operated on the second electronic device 200. Subsequently, for example, after the second electronic device 200 stops projection of the first application in response to a user operation, the user may use the first application on the first electronic device 100.

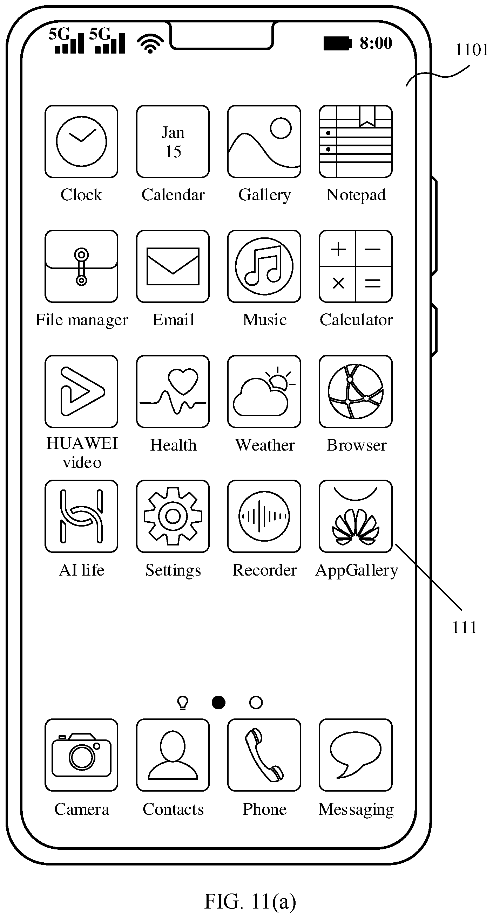

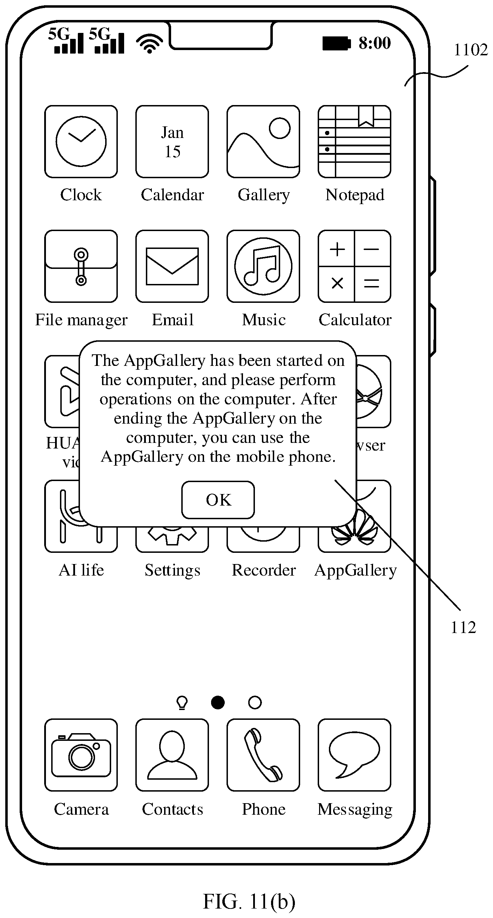

For example, in the scenario shown in FIG. 5A and FIG. 5B, the first electronic device 100 (for example, a mobile phone) displays the first application on the second electronic device 200 (for example, a computer) through projection, where the first application is an application market. On an interface 1101 shown in FIG. 11(a), the mobile phone detects an operation of tapping an application icon 111 of the first application by the user, and determines that the first application is being projected to the computer for use. In this case, on an interface 1102 shown in FIG. 11(b), the mobile phone may display prompt information 112 to prompt the user to use the first application (namely, the application market) on the computer.

In another scenario, in the projection process, the first electronic device 100 and the second electronic device 200 support display of a same projection application, and support synchronization of display content of the projection application.

In some embodiments, in a process in which the first electronic device 100 projects the first application to the second electronic device 200 for display, the second electronic device 200 creates a new projection window to display a first application interface, and the first electronic device 100 runs only the first application in the background, and does not display the interface of the first application. Then, the first electronic device 100 detects an operation of starting the first application on the first electronic device 100 by the user, and the first electronic device 100 may display, in response to the user operation, a first application interface on the first electronic device 100 in the process of projection of the first application.

In some embodiments, to ensure that an electronic device operated by a user refreshes and displays an application interface in real time in response to a user operation, the electronic device operated by the user is set as a primary device, and a window size in which the first electronic device 100 runs the first application in the background needs to be consistent with a requirement of the primary device. A peer electronic device of the primary device is set as a secondary device, and in response to a user operation, roles of the primary device and the secondary device may be freely switched.

The first electronic device 100 determines display of the secondary device based on display content of the primary device and a screen size of the secondary device in response to a user operation, so that the first electronic device 100 and the second electronic device 200 simultaneously display the first application that is being projected.

In some embodiments, the first application run in the computer application running mode, the foldable mobile phone application running mode, the tablet application running mode, or the normal mobile phone application running mode is still used as an example. A foldable mobile phone supports two use forms: a folded state and an unfolded state, and a corresponding foldable mobile phone application also supports to be displayed in the two use forms. Display content of the first application may be different in different use forms. As described above, in the computer application running mode user-defined window size adjustment is supported, and the user is allowed to adjust a width and a height of a window. Display content varies with different window sizes. Therefore, when the first application is run in the computer application running mode or the foldable mobile phone application running mode, display content of the first application on the first electronic device 100 may be different from that on the second electronic device 200.

Optionally, an example in which the first electronic device 100 is a mobile phone and the second electronic device 200 is a computer is used. As shown in the following Table 4, when the first application is run in the computer application running mode or the foldable mobile phone application running mode, a window size (corresponding to a size of a projection window of the second electronic device 200) in which the first electronic device 100 (for example, a mobile phone) runs the first application in the background and a window size in which the first electronic device 100 displays the first application when the second electronic device 200 (for example, a computer) is a primary device and a window size (corresponding to the size of the projection window of the second electronic device 200) in which the first electronic device 100 runs the first application in the background and a window size in which the first electronic device 100 displays the first application when the first electronic device 100 (or example, the mobile phone) is a primary device are described separately as examples.

**Table 4**

| Application running mode | The second electronic device 200 (for example, the computer) is the primary device | | The first electronic device 100 (for example, the mobile phone) is the primary device | |
|---|---|---|---|---|
| | The window size in which the mobile phone runs the first application in the background | The window size in which the mobile phone displays the first application | The window size in which the mobile phone runs the first application in the background | The window size in which the mobile phone displays the first application |
| Computer application running mode | Default window size of a computer application | Screen size of the mobile phone | Screen size of the mobile phone | Screen size of the mobile phone |

(continued)

| Application running mode | The second electronic device 200 (for example, the computer) is the primary device | | The first electronic device 100 (for example, the mobile phone) is the primary device | |
|---|---|---|---|---|
| | The window size in which the mobile phone runs the first application in the background | The window size in which the mobile phone displays the first application | The window size in which the mobile phone runs the first application in the background | The window size in which the mobile phone displays the first application |
| Foldable mobile phone application running mode | Default screen size of a foldable mobile phone in an unfolded state | Screen size of the mobile phone | Screen size of the mobile phone | Screen size of the mobile phone |

For example, as shown in FIG. 12(a)-1 and FIG. 12(a)-2, in a process in which the first electronic device 100 projects the first application to the second electronic device 200 in the computer application running mode, an operation of tapping an application icon 122 of the first application by the user is detected. The first electronic device 100 determines that the user indicates to display the first application on the first electronic device 100, and determines that the first electronic device 100 is a primary device. As shown in Table 4, when the first electronic device 100 (for example, the mobile phone) is a primary device and the application running mode of the first application is a computer application running mode, the window size that is of the first application and in which the first electronic device 100 runs the first application in the background is the screen size of the first electronic device 100 (namely, the mobile phone), and the first electronic device 100 may separately adjust a width and a height of a window based on display content of the first application run in the background and a screen size of the second electronic device 200 (namely, the computer), to adaptively generate a "page snapshot" to refresh display of the second electronic device 200. As shown in FIG. 12(b)-1 and FIG. 12(b)-2, the first electronic device 100 displays the first application in the screen size of the first electronic device 100, and the second electronic device 200 displays the first application in a projection window 121 in a window size corresponding to the computer application running mode through projection based on the received "page snapshot".

Then, as shown in FIG. 12(b)-1 and FIG. 12(b)-2, the second electronic device 200 detects an operation (for example, an operation of tapping a blank area in the projection window 121) performed by the user on the projection window 121, and sends a corresponding input event to the first electronic device 100. The first electronic device 100 determines, based on the input event, to switch the second electronic device 200 to a primary device, and the first electronic device 100 to a secondary device. As shown in Table 4, when the second electronic device 200 (for example, the computer) is a primary device and the application running mode of the first application is a computer application running mode, the window size that is of the first application and in which the first electronic device 100 runs the first application in the background is the default window size of the computer application, and the first electronic device 100 may separately adjust a width and a height of a window based on display content of the first application run in the background and a screen size of the first electronic device 100 (namely, the mobile phone), to adaptively generate a "page snapshot" to refresh display of the first electronic device 100. As shown in FIG. 12(c)-1 and FIG. 12(c)-2, the second electronic device 200 displays the first application in the projection window 121 in the default window size of the computer application through projection, and the first electronic device 100 displays the first application in the screen size of the first electronic device 100 based on the generated "page snapshot".

For another example, as shown in FIG. 13(a)-1 and FIG. 13(a)-2, in a process in which the first electronic device 100 projects the first application to the second electronic device 200 in the foldable mobile phone application running mode, an operation of tapping an application icon 132 of the first application by the user is detected. The first electronic device 100 determines that the user indicates to display the first application on the first electronic device 100, and determines that the first electronic device 100 is a primary device. As shown in Table 4, when the first electronic device 100 (for example, the mobile phone) is a primary device and the application running mode of the first application is a foldable mobile phone application running mode, a window size that is of the first application and in which the first electronic device 100 runs the first application in the background is the screen size of the first electronic device 100 (namely, the mobile phone), and the first electronic device 100 may adaptively generate a "page snapshot" in the default screen size of the foldable mobile phone in the unfolded state based on display content of the first application run in the background and the foldable mobile phone running mode of the first application, to refresh display of the second electronic device 200. As shown in FIG. 13 (b)-1 and FIG. 13 (b)-2, the first electronic device 100 displays the first application in the screen size of the first electronic device 100, and the second electronic device 200 displays the first application in a projection window 131 in a window size corresponding to the foldable mobile phone application running mode through projection based on the received "page snapshot".

Then, as shown in FIG. 13(b)-1 and FIG. 13(b)-2, the second electronic device 200 detects an operation (for example, an operation of tapping a blank area in the projection window 131) performed by the user on the projection window 131, and sends a corresponding input event to the first electronic device 100. The first electronic device 100 determines, based on the input event, to switch the second electronic device 200 to a primary device, and the first electronic device 100 to a secondary device. As shown in Table 4, when the second electronic device 200 (for example, the computer) is a primary device and the application running mode of the first application is a foldable mobile phone application running mode, the window size that is of the first application and in which the first electronic device 100 runs the first application in the background is the default screen size of the foldable mobile phone in the unfolded state, and the first electronic device 100 may adaptively generate, based on display content of the first application run in the background and a screen size of the first electronic device 100 (namely, the mobile phone), a "page snapshot" to refresh display of the first electronic device 100. As shown in FIG. 13(c)-1 and FIG. 13(c)-2, the second electronic device 200 displays the first application in the projection window 131 in the default screen size of the foldable mobile phone in the unfolded state through projection, and the first electronic device 100 displays the first application in the screen size of the first electronic device 100 based on the generated "page snapshot".

In this way, in the projection process, the first electronic device 100 and the second electronic device 200 can display the same projection application based on the user operation. In additions, different from screen mirroring, display content of a projection application of the first electronic device 100 may be different from display content of the projection application of the second electronic device 200. On the basis of ensuring that the first electronic device 100 and the second electronic device 200 synchronously display and refresh the projection application, a display effect is further improved, and user experience is improved.

In another implementation, the first application run in the tablet application running mode, the normal mobile phone application running mode, the computer application running mode, or the foldable mobile phone application running mode is still used as an example. In a display process of a normal mobile phone application and a tablet application, an application window size does not change. Therefore, when the first application is run in the tablet application running mode or the normal mobile phone application running mode, display content of the first application on the first electronic device 100 is the same as that on the second electronic device 200.

Optionally, an example in which the first electronic device 100 is a mobile phone and the second electronic device 200 is a computer is still used. As shown in the following Table 5, when the first application is run in the tablet application running mode or the normal mobile phone application running mode, a window size (corresponding to a size of a projection window of the second electronic device 200) in which the first electronic device 100 (for example, a mobile phone) runs the first application in the background and a window size in which the first electronic device 100 displays the first application when the second electronic device 200 (for example, a computer) is a primary device and a window size (corresponding to the size of the projection window of the second electronic device 200) in which the first electronic device 100 runs the first application in the background and a window size in which the first electronic device 100 displays the first application when the first electronic device 100 (or example, the mobile phone) is a primary device are described separately as examples.

**Table 5**

| Application running mode | The second electronic device 200 (the computer) is the primary device | | The first electronic device 100 (the mobile phone) is the primary device | |
| --- | --- | --- | --- | --- |
| | Window size in which the mobile phone runs the first application in the background | Window size in which the mobile phone displays the first application | Window size in which the mobile phone runs the first application in the background | Window size in which the mobile phone displays the first application |
| Tablet application running mode | Default screen size of a tablet | Size that is proportionally zoomed in or out from the default screen size of the tablet | Screen size of the mobile phone | Screen size of the mobile phone |
| Normal mobile phone application running mode | Screen size of the mobile phone | Screen size of the mobile phone | Screen size of the mobile phone | Screen size of the mobile phone |

For example, as shown in FIG. 14(a)-1 and FIG. 14(a)-2, in a process in which the first electronic device 100 projects the first application to the second electronic device 200 in the tablet application running mode, an operation of tapping an application icon 142 of the first application by the user is detected. The first electronic device 100 determines that the user indicates to display the first application on the first electronic device 100, and determines that the first electronic device 100 is a primary device. As shown in Table 5, when the first electronic device 100 (for example, the mobile phone) is a primary device and the application running mode of the first application is a tablet application running mode, the window size that is of the first application and in which the first electronic device 100 runs the first application in the background is the screen size of the first electronic device 100 (namely, the mobile phone), and the first electronic device 100 may proportionally zoom in or out, based on display content of the first application run in the background and a screen size of the second electronic device 200 (namely, the computer), the display content of the first application run in the background, to generate a "page snapshot" to refresh display of the second electronic device 200. As shown in FIG. 14(b)-1 and FIG. 14(b)-2, the first electronic device 100 displays the first application in the screen size of the first electronic device 100, and the second electronic device 200 displays the first application in a projection window 141 through projection based on the received "page snapshot".

Then, as shown in FIG. 14(b)-1 and FIG. 14(b)-2, the second electronic device 200 detects an operation (for example, an operation of tapping a blank area in the projection window 141) performed by the user on the projection window 141, and sends a corresponding input event to the first electronic device 100. The first electronic device 100 determines, based on the input event, to switch the second electronic device 200 to a primary device, and the first electronic device 100 to a secondary device. As shown in Table 5, when the second electronic device 200 (for example, the computer) is a primary device and the application running mode of the first application is a tablet application running mode, the window size that is of the first application and in which the first electronic device 100 runs the first application in the background is the default screen size of the tablet, and the first electronic device 100 may proportionally zoom in or out, based on display content of the first application run in the background and a screen size of the first electronic device 100 (namely, the mobile phone), the display content of the first application run in the background, to generate a "page snapshot" to refresh display of the first electronic device 100. As shown in FIG. 14(c)-1 and FIG. 14(c)-2, the second electronic device 200 displays the first application in the projection window 141 in the default screen size of the tablet through projection, and the first electronic device 100 displays the first application based on the generated "page snapshot".

For another example, as shown in FIG. 15(a)-1 and FIG. 15(a)-2, in a process in which the first electronic device 100 projects the first application to the second electronic device 200 in the normal mobile phone application running mode, an operation of tapping an application icon 152 of the first application by the user is detected. The first electronic device 100 determines that the user indicates to display the first application on the first electronic device 100, and determines that the first electronic device 100 is a primary device. As shown in Table 5, when the first electronic device 100 (for example, the mobile phone) is a primary device and the application running mode of the first application is a normal mobile phone application running mode, the window size that is of the first application and in which the first electronic device 100 runs the first application in the background is the screen size of the first electronic device 100 (namely, the mobile phone), and the first electronic device 100 may proportionally zoom in or out, based on display content of the first application run in the background and a screen size of the second electronic device 200 (namely, the computer), the display content of the first application run in the background, to generate a "page snapshot" to refresh display of the second electronic device 200. As shown in FIG. 15(b)-1 and FIG. 15(b)-2, the first electronic device 100 displays the first application in the screen size of the first electronic device 100, and the second electronic device 200 displays the first application based on the received "page snapshot".

Then, as shown in FIG. 15(b)-1 and FIG. 15(b)-2, the second electronic device 200 detects an operation (for example, an operation of tapping a blank area in a projection window 151) performed by the user on the projection window 151, and sends a corresponding input event to the first electronic device 100. The first electronic device 100 determines, based on the input event, to switch the second electronic device 200 to a primary device, and the first electronic device 100 to a secondary device. As shown in Table 5, when the second electronic device 200 (for example, the computer) is a primary device and the application running mode of the first application is a normal mobile phone application running mode, the window size that is of the first application and in which the first electronic device 100 runs the first application in the background is the screen size of the first electronic device 100 (namely, the mobile phone), and the first electronic device 100 may generate, based on display content of the first application run in the background and the screen size of the first electronic device 100 (namely, the mobile phone), a "page snapshot" to refresh display of the first electronic device 100. As shown in FIG. 15(c)-1 and FIG. 15(c)-2, the second electronic device 200 displays the first application in the projection window 151 in the screen size of the mobile phone through projection, and the first electronic device 100 displays the first application based on the generated "page snapshot".

In this way, in a projection process, in response to the user operation, the first electronic device 100 and the second electronic device 200 can synchronously display the same projection application, to meet a use requirement of the user.

For example, FIG. 16 is a schematic flowchart of a projection method according to an embodiment of this application. As shown in FIG. 16, the method includes the following steps.

S1601: A second electronic device sends a display request to a first electronic device.

Optionally, the display request is a request sent by the second electronic device in response to an operation performed by a user on a projection window. The display request carries coordinate information and operation information that correspond to a user operation, the coordinate information indicates a location of the user operation in the projection window, and the operation information indicates the user operation like a tap and a double-tap.

For example, as shown in FIG. 5A and FIG. 5B, after establishing a projection connection to the first electronic device, the second electronic device displays the projection window 51, and displays a desktop of the first electronic device in the projection window 51. The second electronic device detects an operation of tapping display content in the projection window 51 by the user, for example, an operation of tapping an application icon 52 of a first application, and sends a display request to the first electronic device. The display request carries coordinate information of the application icon 52 and operation information, for example, information about the tap operation. In this case, after receiving the display request, the first electronic device may determine that the coordinate information carried in the display request corresponds to the first application.

S1602: The first electronic device determines the first application in response to the display request sent by the second electronic device.

In some embodiments, after receiving the display request, the first electronic device can determine, based on the coordinate information and the operation information that are carried in the display request, an application that the user indicates to perform projection.

For example, as shown in FIG. 5A and FIG. 5B, after receiving the display request, the first electronic device may determine, based on the coordinate information and the operation information that are carried in the display request, that the user operation is a single-tap operation on the icon 52, and is used to indicate to start an application market. Then, the first electronic device may determine the first application, namely, the application market.

S1603: The first electronic device determines an application running mode of the first application.

The application running mode corresponds to one or more electronic device types. Optionally, the application running mode supported by the first application includes one or more of the following: a computer application running mode, a tablet application running mode, a foldable mobile phone application running mode, and a normal mobile phone application running mode.

In some embodiments, after determining the first application, the first electronic device may determine, by using a configuration file of the first application or querying a second application, the application running mode supported by the first application. The second application is an application market.

In some embodiments, the first application has different interface layouts in different application running modes.

For example, as shown in FIG. 6A, the first application is run in a computer application running mode, and a home page of the first application is displayed through projection. As shown in FIG. 7A, the first application is run in a tablet application running mode, and the home page of the first application is also displayed through projection. As shown in FIG. 8, the first application is run in a foldable mobile phone application running mode, and the home page of the first application is also displayed through projection. As shown in FIG. 9A, the first application is run in a normal mobile phone application running mode, and the home page of the first application is also displayed through projection.

It can be learned that, in different application running modes, the home page of the first application has different interface layouts. For example, in the computer application running mode, the tablet application running mode, the foldable mobile phone application running mode, and the normal mobile phone application running mode, display elements in the home page of the first application decrease sequentially.

In this way, different application running modes may bring different projection display experience to the user.

S 1604: The first electronic device sends first projection data to the second electronic device based on a first application running mode in the application running mode of the first application.

Optionally, as shown in Table 1, in different application running modes, corresponding projection window sizes are different. Different content may be displayed in different window sizes. For example, a larger window size indicates richer display content, and different window sizes may bring different display experience to the user. Therefore, a priority sequence of different application running modes may be determined based on window sizes. For example, a larger window size can bring better display experience to the user, and therefore a corresponding application running mode may have a higher priority.

In some embodiments, the first electronic device sends the first projection data of the first application to the second electronic device based on the first application running mode with a highest priority in the application running mode.

For example, after determining the application running mode supported by the first application, the first electronic device may determine the first application running mode with the highest priority in the application running mode. In this way, the first projection data is sent to the second electronic device based on the first application running mode, so that the second electronic device can provide better display experience for the user.

In this way, the first electronic device makes full use of an application ecosystem, and selects, based on the application running mode supported by the first application, a better application running mode from the application running mode to run the first application in a background. In this way, more display content is displayed on the second electronic device, and better display experience is provided for the user.

In some other embodiments, the first electronic device determines a device type of the second electronic device. Then, the first electronic device determines the first application running mode based on the device type of the second electronic device and a priority sequence in the application running mode, and sends the first projection data of the first application to the second electronic device based on the first application running mode.

For example, the first electronic device selects an application running mode that corresponds to the device type of the second electronic device and that has a highest priority in the application running mode supported by the first application. For example, the first electronic device determines that the application running mode supported by the first application includes the computer application running mode, the tablet application running mode, the foldable mobile phone application running mode, and the normal mobile phone application running mode, and determines that the device type of the second electronic device is a tablet. The first electronic device determines that an application running mode corresponding to the tablet is the tablet application running mode, and the application running mode supported by the first application includes the tablet application running mode. In this case, the first electronic device sends the first projection data of the first application to the second electronic device based on the tablet application running mode (namely, the first application running mode).

In this way, a projection window size of the second electronic device matches the device type of the second electronic device. This improves a projection display effect of the second electronic device, and further improves user experience.

S1605: The second electronic device displays the first application in the first application running mode based on the first projection data.

In some embodiments, after receiving the projection data, the second electronic device may determine a corresponding projection window size based on the projection data. Then, the second electronic device may display the first application in a projection window based on the determined projection window size.

In this way, the first electronic device can select, based on the application running mode supported by the first application, the appropriate first application running mode for projection, instead of performing proportional projection only based on a device type of the first electronic device. Therefore, the second electronic device displays the first application in the first application running mode, so that a better display effect can be provided for the user, and user experience can be improved.

In addition, the first application is run on the first electronic device. In view of this, a developer may not need to perform cross-device migration adaptation in an application development process, to reduce a development workload. In addition, the first application may be prevented from being run on the second electronic device, to reduce a risk of information leakage.

In some embodiments, in response to an operation of starting the first application on the first electronic device by the user, second projection data of the first application is sent to the second electronic device based on a second application running mode corresponding to the device type of the first electronic device; and the first electronic device displays the first application in the second application running mode. The second projection data is used to cause the second electronic device to display the first application in the second application running mode.

For example, as shown in FIG. 14(a)-1 and FIG. 14(a)-2, in a process in which the first electronic device projects the first application to the second electronic device in the tablet application running mode, an operation of tapping the application icon 142 of the first application by the user is detected. The first electronic device determines that the user indicates to display the first application on the first electronic device, and determines that the first electronic device is a primary device. As shown in Table 5, when the first electronic device is a primary device and the application running mode of the first application is a tablet application running mode, a window size that is of the first application and in which the first electronic device runs the first application in the background is a screen size of the first electronic device, and the first electronic device may proportionally zoom in or out, based on display content of the first application run in the background and a screen size of the second electronic device, the display content of the first application run in the background, to generate a "page snapshot" to refresh display of the second electronic device. As shown in FIG. 14(b)-1 and FIG. 14(b)-2, the first electronic device displays the first application in the screen size of the first electronic device, and the second electronic device displays the first application in the projection window 141 through projection based on the received "page snapshot".

An application running mode in which the first electronic device runs the first application in the background corresponds to the first electronic device, for example, a mobile phone application running mode (namely, the second application running mode), and sends the second projection data to the second electronic device in the mobile phone application running mode, to implement projection display of the first application on the second electronic device.

Optionally, based on the foregoing scenario, the second electronic device sends a first operation indication to the first electronic device after detecting an operation performed by the user on the first application in the projection window. Correspondingly, the first electronic device receives the first operation indication sent by the second electronic device, sends, in response to the first operation indication, the first projection data of the first application to the second electronic device based on the first application running mode, and displays the first application in a first window size, where the first window size corresponds to the screen size of the first electronic device, or the first window size is proportional to a second window size corresponding to the first application running mode. Correspondingly, the second electronic device receives the first projection data sent by the first electronic device, and displays the first application in the projection window in the first application running mode based on the first projection data.

For example, as shown in FIG. 14(b)-1 and FIG. 14(b)-2, the second electronic device detects an operation (for example, an operation of tapping a blank area in the projection window 141) performed by the user on the projection window 141, and sends a corresponding input event to the first electronic device. The first electronic device determines, based on the input event, to switch the second electronic device to a primary device, and the first electronic device to a secondary device. As shown in Table 5, when the second electronic device 200 is a primary device and the application running mode of the first application is a tablet application running mode, the window size that is of the first application and in which the first electronic device runs the first application in the background is a default screen size of a tablet, and the first electronic device may proportionally zoom in or out, based on display content of the first application run in the background and the screen size of the first electronic device, the display content of the first application run in the background, to generate a "page snapshot" to refresh display of the first electronic device. As shown in FIG. 14(c)-1 and FIG. 14(c)-2, the second electronic device displays the first application in the projection window 141 in the default screen size of the tablet through projection, and the first electronic device displays the first application based on the generated "page snapshot".

An application running mode in which the first electronic device runs the first application in the background corresponds to the second electronic device, for example, a tablet application running mode (namely, the first application running mode), and sends the first projection data to the second electronic device in the tablet application running mode, to implement projection display of the first application on the second electronic device. In addition, display content in the tablet application running mode is proportionally zoomed in or out on the first electronic device, to synchronously display the first application on the first electronic device.

In this way, in a projection process, in response to the user operation, the first electronic device and the second electronic device can synchronously display the same projection application, to meet a use requirement of the user.

In some other embodiments, the first electronic device displays prompt information in response to an operation of starting the first application on the first electronic device by the user, where the prompt information prompts the user to operate the first application on the second electronic device.

For example, in the scenario shown in FIG. 5A and FIG. 5B, the first electronic device displays the first application on the second electronic device through projection, where the first application is an application market. On the interface 1101 shown in FIG. 11(a), the mobile phone detects an operation of tapping the application icon 111 of the first application by the user, and determines that the first application is being projected to the computer for use. In this case, on the interface 1102 shown in FIG. 11(b), the mobile phone may display the prompt information 112 to prompt the user to use the first application on the computer.

In some embodiments, when the first application running mode is the computer application running mode, the second electronic device sends a second operation indication to the first electronic device when the second electronic device detects an operation of adjusting a projection window size by the user. The first electronic device receives the second operation indication sent by the second electronic device, and sends third projection data of the first application to the second electronic device based on the second operation indication. Correspondingly, the second electronic device receives the third projection data, and displays, in the first application running mode based on the third projection data, the first application in the projection window whose window size is adjusted.

For example, in the scenario shown in FIG. 6A, the first electronic device runs the first application in the background in the computer application running mode, to display a projection interface of the first application in the projection window 61 of the second electronic device. The first application run in the computer application running mode supports user-defined window size adjustment, and allows the user to separately adjust a width and a height of a window.

In this case, after detecting an operation of adjusting a size of the projection window 61 by the user, the second electronic device may generate a corresponding window size adjustment event, and send, to the first electronic device, a second operation indication carrying the window size adjustment event. As shown in FIG. 6B-1 and FIG. 6B-2, the first electronic device determines new third projection data in response to the second operation indication, and sends the new third projection data to the second electronic device.

In this way, the second electronic device can display, based on the third projection data, a new first application interface in the projection window 61 whose window size is adjusted.

In some other embodiments, when the first application running mode is not the computer application running mode, in response to an operation of adjusting a projection window size by the user, the second electronic device proportionally zooms in or out and displays the projection window and a projection interface of the first application in the projection window.

For example, in the scenario shown in FIG. 7A, the first electronic device runs the first application in the background in a tablet application running mode, to display a projection interface of the first application in the projection window 71 of the second electronic device. The first application run in the tablet application running mode, the foldable mobile phone application running mode, or the normal mobile phone application running mode supports proportional window size adjustment, and only allows the user to adjust a width and a height of a window at the same time, and in the process of adjusting a window size, an aspect ratio of the window remains unchanged.

In this case, after the second electronic device detects an operation of adjusting a size of the projection window 71 by the user, as shown in FIG. 7B, the second electronic device 200 may directly proportionally zoom in or out the projection window 71 and display content in the projection window 71 based on the user operation, so that an adjusted projection window meets a user requirement.

In this way, the projection window is adjusted, so that projection of the second electronic device 200 can better meet a use habit of the user, and user experience is further improved.

Optionally, the first electronic device may further perform steps and functions performed by the first electronic device 100 or the mobile phone in the foregoing embodiments, and the second electronic device may further perform steps and functions performed by the second electronic device 200 or the computer in the foregoing embodiments, to implement the scenario configuration method provided in the foregoing embodiments.

The projection method provided in embodiments of this application is described above in detail with reference to FIG. 5A to FIG. 16. The following describes in detail an electronic device provided in an embodiment of this application with reference to FIG. 17 and FIG. 18.

In a possible design, FIG. 17 is a diagram of a structure of a first electronic device according to an embodiment of this application. As shown in FIG. 17, the first electronic device 1700 may include a transceiver unit 1701 and a processing unit 1702. The first electronic device 1700 may be configured to implement functions of the first electronic device 100 in the foregoing method embodiments.

Optionally, the transceiver unit 1701 is configured to support the first electronic device 1700 in performing S1601 and S1604 in FIG. 16.

Optionally, the processing unit 1702 is configured to support the first electronic device 1700 in performing S1602 and S1603 in FIG. 16.

The transceiver unit may include a receiving unit and a sending unit, may be implemented by a transceiver or a transceiver-related circuit component, and may be a transceiver or a transceiver module. Operations and/or functions of the units in the first electronic device 1700 are respectively intended to implement corresponding procedures of the projection method in the foregoing method embodiments. All related content of the steps in the foregoing method embodiments may be referenced to function descriptions of corresponding function units. For brevity, details are not described herein again.

Optionally, the first electronic device 1700 shown in FIG. 17 may further include a storage unit (not shown in FIG. 17), and the storage unit stores a program or instructions. When the transceiver unit 1701 and the processing unit 1702 execute the program or the instructions, the first electronic device 1700 shown in FIG. 17 may be enabled to perform the projection method in the foregoing method embodiments.

For technical effects of the first electronic device 1700 shown in FIG. 17, refer to technical effects of the projection method in the foregoing method embodiments. Details are not described herein again.

In addition to a form of the first electronic device 1700, the technical solution provided in this application may also be a function unit or a chip in the first electronic device, or an apparatus that matches the first electronic device.

In a possible design, FIG. 18 is a diagram of a structure of a second electronic device according to an embodiment of this application. As shown in FIG. 18, the second electronic device 1800 may include a transceiver unit 1801, a processing unit 1802, and a display unit 1803. The second electronic device 1800 may be configured to implement functions of the second electronic device 200 in the foregoing method embodiments.

Optionally, the transceiver unit 1801 is configured to support the second electronic device 1800 in performing S1601 and S1604 in FIG. 16.

Optionally, the processing unit 1802 is configured to support the second electronic device 1800 in performing S1605 in FIG. 16.

Optionally, the display unit 1803 is configured to support the second electronic device 1800 in performing S1605 in FIG. 16.

The transceiver unit may include a receiving unit and a sending unit, may be implemented by a transceiver or a transceiver-related circuit component, and may be a transceiver or a transceiver module. Operations and/or functions of the units in the second electronic device 1800 are respectively intended to implement corresponding procedures of the projection method in the foregoing method embodiments. All related content of the steps in the foregoing method embodiments may be referenced to function descriptions of corresponding function units. For brevity, details are not described herein again.

Optionally, the second electronic device 1800 shown in FIG. 18 may further include a storage unit (not shown in FIG. 18), and the storage unit stores a program or instructions. When the transceiver unit 1801, the processing unit 1802, and the display unit 1803 execute the program or the instructions, the second electronic device 1800 shown in FIG. 18 may be enabled to perform the projection method in the foregoing method embodiments.

For technical effects of the second electronic device 1800 shown in FIG. 18, refer to technical effects of the projection method in the foregoing method embodiments. Details are not described herein again.

In addition to a form of the second electronic device 1800, the technical solution provided in this application may also be a function unit or a chip in the second electronic device, or an apparatus that matches the second electronic device.

An embodiment of this application further provides a chip system, including a processor. The processor is coupled to a memory. The memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the method disclosed with reference to embodiments of this application may be directly performed by a hardware processor, or may be performed by using a combination of hardware and software modules in the processor.

An embodiment of this application further provides a computer-readable storage medium. The computer-readable storage medium stores a computer program. When the computer program is run on a computer, the computer is enabled to perform the foregoing related steps, to implement the projection method in the foregoing embodiments.

An embodiment of this application further provides a computer program product. When the computer program product runs on a computer, the computer is enabled to perform the foregoing related steps to implement the projection method in the foregoing embodiments.

In addition, an embodiment of this application further provides an apparatus. The apparatus may be specifically a component or a module, and the apparatus may include one or more processors and a memory that are connected to each other. The memory is configured to store a computer program. When the computer program is executed by the one or more processors, the apparatus is enabled to perform the projection method in the foregoing method embodiments.

The apparatus, the computer-readable storage medium, the computer program product, or the chip provided in embodiments of this application are all configured to perform the corresponding method provided above. Therefore, for beneficial effects that can be achieved, refer to beneficial effects in the corresponding methods provided above. Details are not described herein again.

Method or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

From the descriptions of the foregoing implementations, a person skilled in the art may understand clearly that, for convenience and brevity of description, division into the foregoing function modules is merely used as an example for description. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed method may be implemented in other manners. The apparatus embodiment described above is merely an example. For example, division into modules or units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A projection method, wherein the method comprises:

   determining, by a first electronic device, a first application in response to a display request sent by a second electronic device;
   determining, by the first electronic device, an application running mode supported by the first application, wherein the application running mode corresponds to one or more electronic device types; and
   sending, by the first electronic device, first projection data of the first application to the second electronic device based on a first application running mode in the application running mode, wherein the first projection data is used to cause the second electronic device to display the first application in the first application running mode.

2. The method according to claim 1, wherein the application running mode supported by the first application comprises one or more of the following: a computer application running mode, a tablet application running mode, a foldable mobile phone application running mode, and a normal mobile phone application running mode.

3. The method according to claim 1 or 2, wherein the first application has different interface layouts in different application running modes.

4. The method according to any one of claims 1 to 3, wherein the sending, by the first electronic device, first projection data of the first application to the second electronic device based on a first application running mode in the application running mode comprises:
   sending, by the first electronic device, the first projection data of the first application to the second electronic device based on the first application running mode with a highest priority in the application running mode.

5. The method according to any one of claims 1 to 3, wherein the sending, by the first electronic device, first projection data of the first application to the second electronic device based on a first application running mode in the application running mode comprises:

   determining, by the first electronic device, a device type of the second electronic device;
   determining, by the first electronic device, the first application running mode based on the device type of the second electronic device and a priority sequence in the application running mode; and
   sending, by the first electronic device, the first projection data of the first application to the second electronic device based on the first application running mode.

6. The method according to any one of claims 1 to 5, wherein the method further comprises:
   in response to an operation of starting the first application on the first electronic device by a user, sending second projection data of the first application to the second electronic device based on a second application running mode corresponding to a device type of the first electronic device, wherein the second projection data is used to cause the second electronic device to display the first application in the second application running mode; and displaying, by the first electronic device, the first application in the second application running mode.

7. The method according to claim 6, wherein the method further comprises:

receiving, by the first electronic device, a first operation indication sent by the second electronic device, wherein the first operation indication is an indication sent by the second electronic device after the second electronic device detects an operation performed by the user on the first application in a projection window; and sending, by the first electronic device in response to the first operation indication, the first projection data of the first application to the second electronic device based on the first application running mode, and displaying the first application in a first window size, wherein the first window size corresponds to a screen size of the first electronic device, or the first window size is proportional to a second window size corresponding to the first application running mode.

8. The method according to any one of claims 1 to 5, wherein the method further comprises: displaying, by the first electronic device, prompt information in response to an operation of starting the first application on the first electronic device by a user, wherein the prompt information prompts the user to operate the first application on the second electronic device.

9. The method according to any one of claims 1 to 8, wherein when the first application running mode is the computer application running mode, the method further comprises:

receiving, by the first electronic device, a second operation indication sent by the second electronic device, wherein the second operation indication is an indication sent by the second electronic device after the second electronic device detects an operation of adjusting a projection window size by the user; and sending, by the first electronic device, third projection data of the first application to the second electronic device based on the second operation indication, wherein the third projection data causes the second electronic device to display, in the first application running mode, the first application in the projection window whose size is adjusted.

10. The method according to any one of claims 1 to 9, wherein the determining, by the first electronic device, an application running mode supported by the first application comprises: determining, by the first electronic device by using a configuration file of the first application or querying a second application, the application running mode supported by the first application, wherein the second application is an application market.

11. A projection method, wherein the method comprises:

sending, by a second electronic device, a display request to a first electronic device, wherein the display request is a request sent by the second electronic device in response to an operation performed by a user on a projection window; receiving, by the second electronic device, first projection data sent by the first electronic device, wherein the first projection data is projection data corresponding to a first application running mode in an application running mode supported by a first application that is determined by the first electronic device in response to the display request, and the application running mode corresponds to one or more electronic device types; and displaying, by the second electronic device, the first application in the projection window in the first application running mode based on the first projection data.

12. The method according to claim 11, wherein the application running mode supported by the first application comprises one or more of the following: a computer application running mode, a tablet application running mode, a foldable mobile phone application running mode, and a normal mobile phone application running mode.

13. The method according to claim 11 or 12, wherein the first application has different interface layouts in different application running modes.

14. The method according to any one of claims 11 to 13, wherein the method further comprises:

receiving, by the second electronic device, second projection data sent by the first electronic device, wherein the second projection data is projection data that is determined by the first electronic device based on a second application running mode corresponding to a device type of the first electronic device in response to an operation of starting the first application on the first electronic device by the user; and

displaying, by the second electronic device, the first application in the projection window in the second application running mode based on the second projection data.

15. The method according to claim 14, wherein the method further comprises:

sending, by the second electronic device, a first operation indication to the first electronic device after the second electronic device detects an operation performed by the user on the first application in the projection window; and

receiving, by the second electronic device, the first projection data sent by the first electronic device, and displaying the first application in the projection window in the first application running mode based on the first projection data.

16. The method according to any one of claims 11 to 15, wherein when the first application running mode is the computer application running mode, the method further comprises:

sending, by the second electronic device, a second operation indication to the first electronic device when the second electronic device detects an operation of adjusting a projection window size by the user;

receiving, by the second electronic device, third projection data sent by the first electronic device, wherein the third projection data is projection data corresponding to the first application running mode that is determined by the first electronic device after the first electronic device adjusts the projection window size in response to the second operation indication; and

displaying, by the second electronic device in the first application running mode based on the third projection data, the first application in the projection window whose window size is adjusted.

17. The method according to any one of claims 11 to 15, wherein when the first application running mode is not the computer application running mode, the method further comprises:

in response to an operation of adjusting a projection window size by the user, proportionally zooming in or out and displaying, by the second electronic device, the projection window and a projection interface of the first application in the projection window.

18. A projection system, wherein the system comprises a first electronic device and a second electronic device, wherein

the second electronic device is configured to send a display request to the first electronic device, wherein the display request is a request sent by the second electronic device in response to an operation performed by a user on a projection window;

the first electronic device is configured to determine a first application in response to the display request sent by the second electronic device;

the first electronic device is further configured to determine an application running mode supported by the first application, wherein the application running mode corresponds to one or more electronic device types;

the first electronic device is further configured to send first projection data of the first application to the second electronic device based on a first application running mode in the application running mode;

the second electronic device is further configured to receive the first projection data; and

the second electronic device is further configured to display the first application in the projection window in the first application running mode based on the first projection data.

19. The system according to claim 18, wherein the application running mode supported by the first application comprises one or more of the following: a computer application running mode, a tablet application running mode, a foldable mobile phone application running mode, and a normal mobile phone application running mode.

20. The system according to claim 18 or 19, wherein the first application has different interface layouts in different application running modes.

21. The system according to any one of claims 18 to 20, wherein

the first electronic device is further configured to: in response to an operation of starting the first application on the first electronic device by the user, send second projection data of the first application to the second electronic device based on a second application running mode corresponding to a device type of the first electronic device; and display the first application in the second application running mode;

the second electronic device is further configured to receive the second projection data; and

the second electronic device is further configured to display the first application in the projection window in the second application running mode based on the second projection data.

22. The system according to claim 21, wherein

the second electronic device is further configured to send a first operation indication to the first electronic device after detecting an operation performed by the user on the first application in the projection window;

the first electronic device is further configured to: in response to the first operation indication, send the first projection data of the first application to the second electronic device based on the first application running mode; and display the first application in a first window size, wherein the first window size corresponds to a screen size of the first electronic device, or the first window size is proportional to a second window size corresponding to the first application running mode; and

the second electronic device is further configured to: receive the first projection data sent by the first electronic device; and display the first application in the projection window in the first application running mode based on the first projection data.

23. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 10.

24. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 11 to 17.

25. A computer-readable storage medium, wherein the computer-readable storage medium comprises a computer program, and when the computer program is run on an electronic device, the electronic device is enabled to perform the method according to any one of claims 1 to 10, or the electronic device is enabled to perform the method according to any one of claims 11 to 17.

26. A computer program product, wherein when the computer program product runs on a computer, the computer is enabled to perform the method according to any one of claims 1 to 10, or the computer is enabled to perform the method according to any one of claims 11 to 17.

FIG. 1A

XXXXXX

102

XXXXXX Details XXXXXX

FIG. 1B

FIG. 2A

FIG. 2B

FIG. 3

Antenna 1

Antenna 2

| Mobile communication module 2G/3G/4G/5G [150] | Wireless communication module BT/WLAN/GNSS/NFC/IR/FM [160] |

| Speaker [170A] | | |
| Receiver [170B] | Audio module [170] | |
| Microphone [170C] | | |
| Headset jack [170D] | | |

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB port [130]

Charging input

Charging management module [140]

Power management module [141]

Battery [142]

FIG. 4

FIG. 5A

CONT.
FROM
FIG. 5A
~

100

5G 5G

8:00

FIG. 5B

EP 4 513 323 A1

FIG. 6A

FIG. 6B-1

EP 4 513 323 A1

CONT.
FROM
FIG. 6B-1
~

100

FIG. 6B-2

EP 4 513 323 A1

FIG. 7A

FIG. 7B

FIG. 8

FIG. 9A

**Recommendations** | Application list | Game list | Search

Search for applications

Learning English together

Featured applications

Install    Install    Install    Install

Featured games

Install    Install    Install    Install

Clock    Calendar    Gallery    Notepad

File manager    Email    Music    Calculator

HUAWEI video    Health    Weather    Browser

AI life    Settings    Recorder    AppGallery

Camera    Contacts    Phone    Messaging

Jan 15

92

200

51

FIG. 9B

EP 4 513 323 A1

FIG. 10

FIG. 11(a)

FIG. 11(b)

FIG. 12(a)-1

EP 4 513 323 A1

FIG. 12(a)-2

FIG. 12(b)-1

EP 4 513 323 A1

CONT.
FROM
FIG. 12(b)-1

FIG. 12(b)-2

FIG. 12(c)-1

EP 4 513 323 A1

FIG. 12(c)-2

TO
FIG. 13(a)-2

100

132

| | | | |
|---|---|---|---|
| Clock | Calendar | Gallery | Notepad |
| File manager | Email | Music | Calculator |
| HUAWEI video | Health | Weather | Browser |
| AI life | Settings | Recorder | AppGallery |
| Camera | Contacts | Phone | Messaging |

5G 5G   8:00

Jan 15

FIG. 13(a)-1

CONT.
FROM
FIG. 13(a)-1

FIG. 13(a)-2

~
TO
FIG. 13(b)-2

100

5G 5G  8:00

**Recommendations** Application Game Search
list list list

Search for applications

Learning English together

Featured applications

Install Install Install Install

Featured games

Install Install Install Install

FIG. 13(b)-1

60

FIG. 13(b)-2

FIG. 13(c)-1

CONT.
FROM
FIG. 13(c)-1
~

200

Search for applications

Recommendations

Application
list

Game list

Search

Learning
English
together

Featured applications

Install    Install    Install    Install    Install

131

Featured games

Install    Install    Install    Install    Install

FIG. 13(c)-2

FIG. 14(a)-1

CONT.
FROM
FIG. 14(a)-1

FIG. 14(a)-2

EP 4 513 323 A1

FIG. 14(b)-1

FIG. 14(b)-2

FIG. 14(c)-1

TO
FIG. 14(c)-2

100

8:00

5G 5G

Search for applications

**Recommendations**

Application
list

Game list

Search

Learning
English
together

Featured applications

Install Install Install Install Install Install Install Install

Featured games

Install Install Install Install Install Install Install Install

FIG. 14(c)-2

EP 4 513 323 A1

FIG. 15(a)-1

TO
FIG. 15(a)-2

100

152

200

Recommendations Application Game Search
list list

Search for applications

Learning
English
together

Featured applications

Install   Install   Install   Install

Featured games

Install   Install   Install   Install

151

FIG. 15(a)-2

100

5G 5G 8:00

Recommendations  Application  Game  Search
list      list

Search for applications

Learning English together

Featured applications

Install  Install  Install  Install

Featured games

Install  Install  Install  Install

TO
FIG. 15(b)-2

FIG. 15(b)-1

EP 4 513 323 A1

CONT.
FROM
FIG. 15(b)-1

200

Recommendations  Application  Game  Search
list  list

🔍 Search for applications

Learning
English
together

Featured applications

Install    Install    Install    Install

Featured games

Install    Install    Install    Install

151

FIG. 15(b)-2

FIG. 15(c)-1

EP 4 513 323 A1

CONT.
FROM
FIG. 15(c)-1

FIG. 15(c)-2

```
┌─────────────────────────┐                      ┌─────────────────────────┐
│  First electronic device │                      │ Second electronic device │
└─────────────────────────┘                      └─────────────────────────┘
             │                                                 │
             │            S1601: Display request               │
             │ ◄───────────────────────────────────────────────│
┌────────────┴────────────┐                                    │
│  S1602: Determine a first│                                    │
│ application in response  │                                    │
│ to the display request   │                                    │
│ sent by the second       │                                    │
│ electronic device        │                                    │
└────────────┬────────────┘                                    │
┌────────────┴────────────┐                                    │
│  S1603: Determine an     │                                    │
│ application running mode │                                    │
│ of the first application │                                    │
└────────────┬────────────┘                                    │
             │  S1604: Send first projection data to the       │
             │  second electronic device based on a first      │
             │  application running mode in the application     │
             │  running mode of the first application          │
             │ ───────────────────────────────────────────────►│
             │                              ┌────────────────────┴────────────┐
             │                              │  S1605: Display the first        │
             │                              │ application in the first         │
             │                              │ application running mode based   │
             │                              │ on the first projection data     │
             │                              └────────────────────┬────────────┘
             │                                                    │
```

FIG. 16

```
┌─────────────────────────────────────────┐
│  First electronic device 1700            │
│                                          │
│        ┌─────────────────┐               │
│        │                 │        1701   │
│        │ Transceiver unit│──────         │
│        │                 │               │
│        └────────┬────────┘               │
│                 │                        │
│        ┌────────┴────────┐        1702   │
│        │                 │──────         │
│        │ Processing unit │               │
│        └─────────────────┘               │
│                                          │
└─────────────────────────────────────────┘
```

FIG. 17

Second electronic device 1800

Transceiver unit — 1801

Processing unit — 1802

Display unit — 1803

FIG. 18

## INTERNATIONAL SEARCH REPORT

| International application No. |
| --- |
| **PCT/CN2023/110542** |

**A.    CLASSIFICATION OF SUBJECT MATTER**

G06F3/14(2006.01)i

According to International Patent Classification (IPC) or to both national classification and IPC

**B.    FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

CNABS, CNTXT, USTXT, WOTXT, IEEE, CNKI: 投屏, 应用, 类型, 选择, 切换, 模式, 显示, 第一, 第二, 电脑, 平板, 手机, 优先级, screen, projection, application, type, selection, switch, mode, display, first, second, computer, tablet, phone, priority

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114691067 A (HUAWEI TECHNOLOGIES CO., LTD.) 01 July 2022 (2022-07-01) description, paragraphs [0058]-[0160], and figures 3-9 | 1-5, 8-13, 16-20, 23-26 |
| A | CN 112861638 A (HUAWEI TECHNOLOGIES CO., LTD.) 28 May 2021 (2021-05-28) entire document | 1-26 |
| A | CN 112286477 A (GUANGDONG OPPO MOBILE COMMUNICATIONS CO., LTD.) 29 January 2021 (2021-01-29) entire document | 1-26 |
| A | CN 113741840 A (HUAWEI TECHNOLOGIES CO., LTD.) 03 December 2021 (2021-12-03) entire document | 1-26 |
| A | WO 2022052772 A1 (HUAWEI TECHNOLOGIES CO., LTD.) 17 March 2022 (2022-03-17) entire document | 1-26 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 October 2023** | **17 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/110542** |

| Patent document cited in search report | | | Publication date (day/month/year) | Patent family member(s) | | | Publication date (day/month/year) |
|---|---|---|---|---|---|---|---|
| CN | 114691067 | A | 01 July 2022 | None | | | |
| CN | 112861638 | A | 28 May 2021 | None | | | |
| CN | 112286477 | A | 29 January 2021 | None | | | |
| CN | 113741840 | A | 03 December 2021 | None | | | |
| WO | 2022052772 | A1 | 17 March 2022 | EP | 4207777 | A1 | 05 July 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210981762